# EUROPÄISCHE PATENTANMELDUNG

(11) **EP 4 660 257 A1**
(43) Veröffentlichungstag der Anmeldung: **10.12.2025**
(21) Anmeldenummer: 25155563.7
(22) Anmeldetag: 03.02.2025
(51) Int. Cl.: C09D 5/00

(54) **GLEITLACK**

(71) Anmelder: SurTec International GmbH, 64625 Bensheim (DE)
(72) Erfinder: Haeger, Anna, 71229 Leonberg (DE); Berghausen, Tobias, 80939 München (DE); Betke, Tobias, 82194 Gröbenzell (DE); Thamerus, Heike, 81477 München (DE)
(74) Vertreter: Kuhn, Daniela

(57) **Zusammenfassung**

Die Erfindung betrifft einen Gleitlack umfassend
a1) Talkum in einer Menge von 2 Gew.% bis 15 Gew.%, bezogen auf das Gesamtgewicht des Gleitlacks,
a2) Graphit in einer Menge von 0,5 Gew.% bis 10 Gew.%, bezogen auf das Gesamtgewicht des Gleitlacks,
a3) Polymethylharnstoff in einer Menge von 0,5 Gew.% bis 10 Gew.%, bezogen auf das Gesamtgewicht des Gleitlacks,
a4) Bornitrid in einer Menge von 0,8 Gew.% bis 5 Gew.%, bezogen auf das Gesamtgewicht des Gleitlacks,
b) mindestens ein Bindemittel in einer Menge von 5 Gew.% bis 60 Gew.%, bezogen auf das Gesamtgewicht des Gleitlacks, sowie
c) mindestens ein Lösungsmittel in einer Menge von 50 Gew.% bis 80 Gew.%, bezogen auf das Gesamtgewicht des Gleitlacks.

## Beschreibung

Die Erfindung betrifft einen Gleitlack, eine aus dem Gleitlack hergestellte Gleitlackschicht, einen Pulverlack, der auf den Komponenten des Gleitlacks basiert sowie ihre Verwendung zur Schmierung eines tribologischen Systems, insbesondere eines tribologischen Systems im Automobilbereich.

Gleitlacke sind funktionale Beschichtungen, die entwickelt wurden, um die Reibung zwischen Oberflächen zu minimieren. Sie sind ein unverzichtbares Element in einer Vielzahl von Anwendungen, da sie die Effizienz und Langlebigkeit von Maschinen und Geräten erhöhen. In industriellen Umgebungen, wo Maschinen oft unter extremen Bedingungen arbeiten, kann eine hohe Reibung zu einem erhöhten Verschleiß führen. Dies kann die Lebensdauer der Maschine erheblich verkürzen und zu kostspieligen Reparaturen oder sogar zum Ausfall der Maschine führen. Durch die Verwendung von Gleitlacken kann Reibung und Verschleiß minimiert und so die Lebensdauer der Maschine verlängert werden. Dies führt nicht nur zu Kosteneinsparungen, sondern kann auch die Sicherheit am Arbeitsplatz verbessern, indem das Risiko von Maschinenausfällen und damit verbundenen Unfällen reduziert wird.

Gleitlacke können zur Beschichtung von metallischen und nichtmetallischen Oberflächen verwendet werden. Ein wichtiges Einsatzgebiet für Gleitlacke sind Elastomere, wie sie beispielsweise in Dichtungen verwendet werden. Elastomere zeichnen sich durch hohe elastische Eigenschaften aus. Sie können sich unter Belastung verformen und danach wieder in ihre ursprüngliche Form zurückkehren. Hierdurch können sie für eine Vielzahl von Anwendungen, wie beispielsweise Dichtungen eingesetzt werden, die eine dauerhafte Abdichtung gegen Luft, Wasser und andere Substanzen bieten müssen. Beim Einsatz elastischer Materialien entsteht aber auch Reibung, was zu Verschleiß und einer verkürzten Lebensdauer führen kann. Durch die Beschichtung mit Gleitlacken kann diese Reibung reduziert und so der Verschleiß verringert werden.

So enthalten beispielsweise Türdichtungen in der Regel ein Basisprofil aus einem elastischen Material wie EPDM (Ethylen-Propylen-Dien-Kautschuk). Türdichtungen werden oftmals mit einer Flockschicht beflockt, die für eine weiche Oberfläche sorgt und die Dichtungseigenschaften verbessert. Hierzu wird auf das Basisprofil eine Schicht aus Flock, also kurzen Fasern, aufgetragen. Auf die beflockte Oberfläche wird dann ein Gleitlack aufgetragen, der die Reibung zwischen der Dichtung und der Tür oder dem Fensterrahmen reduziert. Dies erleichtert das Öffnen und Schließen und verlängert die Lebensdauer der Dichtung. Hierbei ist ein gutes Benetzungsverhalten des Lacks auf den Flockfasern vorteilhaft. Erwünscht ist insbesondere eine möglichst gleichmäßige und vollständige Benetzung der Fasern. In manchen Ausführungsformen kann es jedoch vorteilhaft sein, wenn die Dicke der Lackschicht an der Faserspitze höher ist.

Gleitlacke können eine Vielzahl von Komponenten aufweisen, abhängig von der spezifischen Anwendung und den gewünschten Eigenschaften. Als Hauptkomponenten enthalten Gleitlacke Festschmierstoffe und Bindemittel. Die Festschmierstoffe reduzieren die Reibung und den Verschleiß, während die Bindemittel dazu dienen, den Festschmierstoff auf der Oberfläche zu halten. In vielen Gleitlacken wird Polytetrafluorethylen (PTFE) als Festschmierstoff verwendet, da es sehr hohe Antihaft- und Gleiteigenschaften aufweist. PTFE weist bekanntermaßen eine exzellente Schmierwirkung bedingt durch sehr niedrige und konstante Reibwerte auch unter hohen Belastungen auf, kann Ruckgleiten (stick slip) wirksam verhindern und zeigt eine gute Stabilität auch bei Einsatz unter hoher Scherbeanspruchung. Darüber hinaus hat es eine exzellente chemische Inertheit und sehr günstige toxikologische Eigenschaften bedingt durch die gute chemische und thermische Beständigkeit von PTFE.

Die Verwendung von PTFE ist aber aus Umweltschutzgründen problematisch. So ist die Entsorgung von PTFE-haltigen Materialien aufgrund der hohen Stabilität von PTFE schwierig. Zudem entstehen bei der Herstellung und beim Abbau von PTFE-haltigen Materialien niedermolekulare hochfluorierte Substanzen, die sich in Pflanzen und Tieren anreichern und toxisch sein können. Dazu kommt, dass PTFE sich unter Druck verformen kann, was in bestimmten Anwendungen problematisch ist.

Die Aufgabe der vorliegenden Erfindung besteht darin, einen Gleitlack bereitzustellen, der gute Gleiteigenschaften sowie eine hohe Verschleißbeständigkeit aufweist und mit dem die Nachteile aus dem Stand der Technik zumindest teilweise ausgeräumt werden können. Der Gleitlack soll sich für die Beschichtung von Elastomeren, insbesondere elastischem Flockmaterial eignen und PTFE-frei gefertigt werden können, was ihn zu einer umweltfreundlicheren und sichereren Alternative zu herkömmlichen PTFE-haltigen Gleitlacken machen soll.

Diese Aufgabe wird gelöst durch einen Gleitlack umfassend
a1) Talkum in einer Menge von 2 Gew.% bis 15 Gew.%, bevorzugt von 3 Gew.% bis 13 Gew.%, insbesondere von 4 Gew.% bis 11 Gew.%, bezogen auf das Gesamtgewicht des Gleitlacks,
a2) Graphit in einer Menge von 0,5 Gew.% bis 10 Gew.%, bevorzugt von 0,5 Gew.% bis 6 Gew.%, noch bevorzugter von 0,5 Gew.% bis 4 Gew.%, insbesondere von 0,5 Gew.% bis 2 Gew.%, bezogen auf das Gesamtgewicht des Gleitlacks,
a3) Polymethylharnstoff in einer Menge von 0,5 Gew.% bis 10 Gew.%, bevorzugt von 2 Gew.% bis 9 Gew.%, noch bevorzugter von 3 Gew.% bis 8 Gew.%, insbesondere von 3 Gew.% bis 7 Gew.%, bezogen auf das Gesamtgewicht des Gleitlacks,
a4) Bornitrid in einer Menge von 0,8 Gew.% bis 5 Gew.%, bevorzugt von 0,8 Gew.% bis 4 Gew.%, noch bevorzugter von 0,8 Gew.% bis 3 Gew.%, insbesondere von 0,8 Gew.% bis 2 Gew.%, bezogen auf das Gesamtgewicht des Gleitlacks,
b) mindestens ein Bindemittel in einer Menge von 5 Gew.% bis 60 Gew.%, noch bevorzugter von 10 Gew.% bis 50 Gew.%, insbesondere von 12 Gew.% bis 35 Gew.%, bezogen auf das Gesamtgewicht des Gleitlacks, sowie
c) mindestens ein Lösungsmittel in einer Menge von 50 Gew.% bis 80 Gew.%, bevorzugt von 60 Gew.% bis 80 Gew.%, insbesondere von 65 Gew.% bis 80 Gew.%, bezogen auf das Gesamtgewicht des Gleitlacks.

Der erfindungsgemäße Gleitlack kann auf PTFE verzichten und weist dennoch gute Gleiteigenschaften sowie eine hohe Verschleißbeständigkeit auf. Darüber hinaus zeigt er bessere Druckverformungseigenschaften als ein Gleitlack auf Basis von PTFE als Festschmierstoff.

Der erfindungsgemäße Gleitlack enthält die Festschmierstoffe Talkum a1), Graphit a2), Polymethylharnstoff a3) und Bornitrid a4) zusammen. Er enthält mithin ein Festschmierstoffgemisch.

### Talkum a1)

Der erfindungsgemäße Gleitlack enthält Talkum als Festschmierstoff. Talkum ist ein Schichtsilikat der chemischen Zusammensetzung Mg₃[(OH)₂|Si₄O₁₀]. Talkum ist damit chemisch gesehen ein Magnesiumsilikathydrat.

Bevorzugt weist das Talkum eine Mohshärte von 1 bis 2 und/oder eine Dichte von 2,58 g/cm³ bis 2,83 g/cm³ auf.

Erfindungsgemäß beträgt die Menge an Talkum, jeweils bezogen auf das Gesamtgewicht des Gleitlacks von 2 Gew.% bis 15 Gew.%, bevorzugt von 3 Gew.% bis 13 Gew.%, insbesondere von 4 Gew.% bis 11 Gew.%.

In einer bevorzugten Ausführungsform der Erfindung beträgt die Menge an Talkum, bezogen auf das Gesamtgewicht der Festschmierstoffe a1), a2), a3) und a4) zusammen genommen von 3 Gew.% bis 80 Gew.%, bevorzugt von 5 Gew.% bis 80 Gew.%, noch bevorzugter von 10 Gew.% bis 70 Gew.%, noch bevorzugter von 30 Gew.% bis 70 Gew.%, insbesondere von 50 Gew.% bis 60 Gew.%.

Bevorzugt weist das Talkum eine Partikelgrößenverteilung gekennzeichnet durch einen D50-Wert gemäß ISO 13320, 2020-01-01 von 1 µm bis 20 µm, bevorzugt von 1 µm bis 10 µm, insbesondere von 2 µm bis 6 µm auf.

Ebenfalls bevorzugt weist das Talkum eine Partikelgrößenverteilung gekennzeichnet durch einen D90-Wert gemäß ISO 13320, 2020-01-01 von 1 µm bis 20 µm, bevorzugt von 5 µm bis 15 µm, insbesondere von 5 µm bis 10 µm auf.

### Graphit a2)

Der erfindungsgemäße Gleitlack enthält Graphit als Festschmierstoff. Vorzugsweise weist das Graphit eine hexagonale Struktur auf. In dieser Struktur ist jede Schicht durch schwache Van-der-Waals-Kräfte mit der benachbarten verbunden, was es ermöglicht, dass die Schichten leicht übereinander gleiten können.

Bevorzugt weist das Graphit eine Mohshärte von 1 bis 2 und/oder eine Dichte von 2,1 g/cm³ bis 2,3 g/cm³ auf.

Erfindungsgemäß beträgt die Menge an Graphit, jeweils bezogen auf das Gesamtgewicht des Gleitlacks von 0,5 Gew.% bis 10 Gew.%, bevorzugt von 0,5 Gew.% bis 6 Gew.%, noch bevorzugter von 0,5 Gew.% bis 4 Gew.%, insbesondere von 0,5 Gew.% bis 2 Gew.%.

In einer bevorzugten Ausführungsform der Erfindung beträgt die Menge an Graphit, bezogen auf das Gesamtgewicht der Festschmierstoffe a1), a2), a3) und a4) zusammen genommen von 3 Gew.% bis 80 Gew.%, bevorzugt von 3 Gew.% bis 60 Gew.%, noch bevorzugter von 3 Gew.% bis 30 Gew.% noch bevorzugter von 3 Gew.% bis 15 Gew.% insbesondere von 3 Gew.% bis 10 Gew.%.

Bevorzugt weist das Graphit eine Partikelgrößenverteilung gekennzeichnet durch einen D50-Wert gemäß ISO 13320, 2020-01-01 von 1 µm bis 20 µm, bevorzugt von 1 µm bis 10 µm, insbesondere von 2 µm bis 6 µm auf.

Ebenfalls bevorzugt weist das Graphit eine Partikelgrößenverteilung gekennzeichnet durch einen D90-Wert gemäß ISO 13320, 2020-01-01 von 1 µm bis 20 µm, bevorzugt von 5 µm bis 15 µm, insbesondere von 5 µm bis 10 µm auf.

### Polymethylharnstoff a3)

Der erfindungsgemäße Gleitlack enthält Polymethylharnstoff als Festschmierstoff. Polymethylharnstoff ist ein Polymer, das durch Reaktion von Harnstoff mit Formaldehyd hergestellt werden kann. Ein bevorzugter Polymethylharnstoff hat die CAS Nummer 9011-05-6. Die untenstehenden Abbildungen zeigen übliche Reaktionsschritte und Zwischenstufen für die Herstellung eines beispielhaften Polymethylharnstoffs.

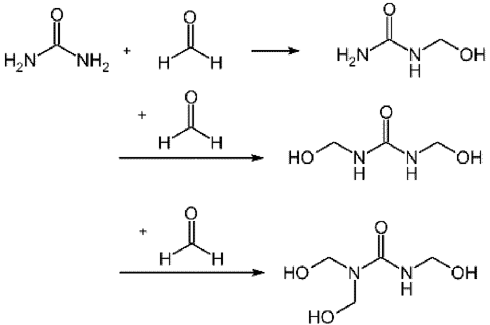

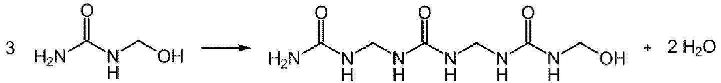

Der Polymethylharnstoff kann unvernetzt, teilweise vernetzt oder vollständig vernetzt sein. Bevorzugt ist der Polymethylharnstoff ein Duromer. Ebenfalls bevorzugt ist der Polymethylharnstoff vollständig vernetzt. Ebenfalls bevorzugt weist der Polymethylharnstoff einen Anteil an extrahierbaren Bestandteilen durch Methanol gemäß ISO 6427:2014-08 von weniger als 10 Gew.%, vorzugsweise von 0 Gew.% bis 10 Gew.%, auf.

Nachfolgend ist beispielhaft ein Strukturausschnitt eines vollständig vernetzten Polymethylharnstoffs gezeigt.

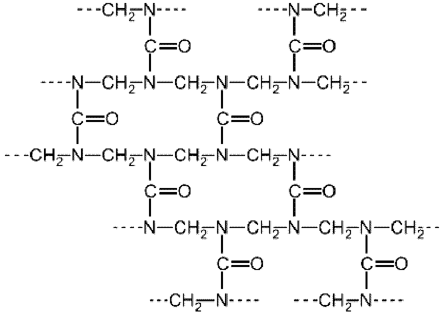

Die Einstellung des Vernetzungsgrads kann durch gezielte Einstellung der Stoffmengenverhältnissen der Edukte und der Reaktionsbedingungen erfolgen.

In einer bevorzuge Ausführungsform weist der Polymethylharnstoff eine Dichte bei 23°C und 1,013 bar im Bereich von 1,4 bis 1,5 g/cm³ auf.

Bevorzugt weist der Polymethylharnstoff eine OH-Zahl, bestimmt nach ISO 4629-1:2016 von weniger als 9 mg KOH/g, besonders bevorzugt von 0,33 mg KOH/g bis 9 mg KOH/g auf. Aus der OH-Zahl kann der OH-Gehalt des Polymethylharnstoffs berechnet werden. Bevorzugt weist der Polymethylharnstoff einen OH-Gehalt von weniger als 0,3 Gew.%, beispielsweise von 0,01 Gew.% bis 0,3 Gew.%, bezogen auf das Gesamtgewicht des Polymethylharnstoffs auf. Diese OH-Gehalte und OH-Zahlen sind vorteilhaft, da hierdurch unerwünschte Nebenreaktionen bei Vernetzung des Gleitlacks vermindert werden können. Insbesondere wirken sich diese Werte vorteilhaft auf die Vernetzungsdichte des Gleitlacks aus.

In einer bevorzugen Ausführungsform weist der Polymethylharnstoff eine Mohshärte von 3 bis 4 auf.

Erfindungsgemäß beträgt die Menge an Polymethylharnstoff, jeweils bezogen auf das Gesamtgewicht des Gleitlacks von 0,5 Gew.% bis 10 Gew.%, bevorzugt von 2 Gew.% bis 9 Gew.%, noch bevorzugter von 3 Gew.% bis 8 Gew.% , insbesondere von 3 Gew.% bis 7 Gew.%.

In einer bevorzugten Ausführungsform beträgt die Menge an Polymethylharnstoff, bezogen auf das Gesamtgewicht der Festschmierstoffe a1), a2), a3) und a4) zusammen genommen von 1,5 Gew.% bis 70 Gew.%, bevorzugt von 5 Gew.% bis 60 Gew.%, noch bevorzugter von 15 Gew.% bis 50 Gew.% noch bevorzugter von 25 Gew.% bis 45 Gew.% insbesondere von 25 Gew.% bis 40 Gew.%.

In einer weiteren bevorzugten Ausführungsform weist der Polymethylharnstoff eine Partikelgrößenverteilung gekennzeichnet durch einen D50-Wert gemäß ISO 13320, 2020-01-01 von 1 µm bis 20 µm, bevorzugt von 1 µm bis 10 µm, insbesondere von 2 µm bis 6 µm auf.

Ebenfalls bevorzugt weist der Polymethylharnstoff eine Partikelgrößenverteilung gekennzeichnet durch einen D90-Wert gemäß ISO 13320, 2020-01-01 von 1 µm bis 20 µm, bevorzugt von 5 µm bis 15 µm, insbesondere von 5 µm bis 10 µm auf.

### Bornitrid a4)

Das Festschmierstoffgemisch enthält erfindungsgemäß Bornitrid als Festschmierstoff. Bornitrid hat die chemische Formel BN. Bevorzugt weist das Bornitrid eine hexagonale Kristallstruktur auf.

Erfindungsgemäß beträgt die Menge an Bornitrid, jeweils bezogen auf das Gesamtgewicht des Gleitlacks von 0,8 Gew.% bis 5 Gew.%, bevorzugt von 0,8 Gew.% bis 4 Gew.%, noch bevorzugter von 0,8 Gew.% bis 3 Gew.%, insbesondere von 0,8 Gew.% bis 2 Gew.%. Erfindungsgemäß wurde gefunden, dass der Gleitlack auch bei einem geringen Anteil an Bornitrid gute Eigenschaften zeigt. Dies ist vorteilhaft, da Bornitrid teuer ist.

Ebenfalls bevorzugt beträgt die Menge an Bornitrid, bezogen auf das Gesamtgewicht der Festschmierstoffe a1), a2), a3) und a4) zusammen genommen von 3 Gew.% bis 70 Gew.%, bevorzugt von 3 Gew.% bis 40 Gew.%, noch bevorzugter von 3 Gew.% bis 25 Gew.% , insbesondere von 3 Gew.% bis 10 Gew.%.

Bevorzugt weist das Bornitrid eine Partikelgrößenverteilung gekennzeichnet durch einen D50-Wert gemäß ISO 13320, 2020-01-01 von 1 µm bis 20 µm, bevorzugt von 1 µm bis 10 µm, insbesondere von 2 µm bis 6 µm auf.

Ebenfalls bevorzugt weist das Bornitrid eine Partikelgrößenverteilung gekennzeichnet durch einen D90-Wert gemäß ISO 13320, 2020-01-01 von 1 µm bis 20 µm, bevorzugt von 5 µm bis 15 µm, insbesondere von 5 µm bis 11 µm auf.

Weiter bevorzugt weisen das Talkum, das Graphit, der Polymethylharnstoff und/oder das Bornitrid unabhängig voneinander eine Partikelgrößenverteilung gekennzeichnet durch einen D50-Wert gemäß ISO 13320, 2020-01-01 von 1 µm bis 20 µm, bevorzugt von 1 µm bis 10 µm, insbesondere von 2 µm bis 6 µm auf.

Ebenfalls bevorzugt weisen das Talkum, das Graphit, der Polymethylharnstoff und/oder das Bornitrid unabhängig voneinander eine Partikelgrößenverteilung gekennzeichnet durch einen D90-Wert gemäß ISO 13320, 2020-01-01 von 1 µm bis 20 µm, bevorzugt von 5 µm bis 15 µm, insbesondere von 5 µm bis 10 µm auf.

### Festschmierstoffgemisch

Erfindungsgemäß enthält der Gleitlack Talkum, Graphit, Polymethylharnstoff und Bornitrid, die als Festschmierstoffe wirken. Der Gleitlack enthält mithin bevorzugt ein Festschmierstoffgemisch, umfassend Talkum, Graphit, Polymethylharnstoff und Bornitrid.

Dabei umfasst das Festschmierstoffgemisch
a1) Talkum in einer Menge von 2 Gew.% bis 15 Gew.%, bevorzugt von 3 Gew.% bis 13 Gew.%, insbesondere von 4 Gew.% bis 11 Gew.%, bezogen auf das Gesamtgewicht des Gleitlacks,
a2) Graphit in einer Menge von 0,5 Gew.% bis 10 Gew.%, bevorzugt von 0,5 Gew.% bis 6 Gew.%, noch bevorzugter von 0,5 Gew.% bis 4 Gew.%, insbesondere von 0,5 Gew.% bis 2 Gew.%, bezogen auf das Gesamtgewicht des Gleitlacks,
a3) Polymethylharnstoff in einer Menge von 0,5 Gew.% bis 10 Gew.%, bevorzugt von 2 Gew.% bis 9 Gew.%, noch bevorzugter von 3 Gew.% bis 8 Gew.%, insbesondere von 3 Gew.% bis 7 Gew.%, bezogen auf das Gesamtgewicht des Gleitlacks,
a4) Bornitrid in einer Menge von 0,8 Gew.% bis 5 Gew.%, bevorzugt von 0,8 Gew.% bis 4 Gew.%, noch bevorzugter von 0,8 Gew.% bis 3 Gew.%, insbesondere von 0,8 Gew.% bis 2 Gew.%, bezogen auf das Gesamtgewicht des Gleitlacks.

In einer bevorzugten Ausführungsform beträgt die Menge des Festschmierstoffgemischs von 4 Gew.% bis 40 Gew.%, noch bevorzugter von 4 Gew.% bis 30 Gew.%, noch bevorzugter von 5 Gew.% bis 30 Gew.%, insbesondere von 10 Gew.% bis 20 Gew.%, bezogen auf Gesamtgewicht des Gleitlacks.

In einer bevorzugten Ausführungsform der Erfindung beträgt die Menge an Talkum, Graphit, Polymethylharnstoff und Bornitrid zusammengenommen von 4 Gew.% bis 40 Gew.%, noch bevorzugter von 4 Gew.% bis 30 Gew.%, noch bevorzugter von 5 Gew.% bis 30 Gew.%, insbesondere von 10 Gew.% bis 20 Gew.%, bezogen auf das Gesamtgewicht des Gleitlacks.

Neben Talkum, Graphit, Polymethylharnstoff und Bornitrid kann das Festschmierstoffgemisch noch weitere Festschmierstoffe enthalten. So kann der Gleitlack mindestens einen weiteren Festschmierstoff ausgewählt aus der Gruppe bestehend aus Polytetrafluorethylen (PTFE), Molybdändisulfid, Graphen (hexagonal), Zinn(IV)-Sulfid, Zink(II)-Sulfid, Wolframdisulfid, Metallsulfid, Calciumphosphat, Silikat, Schichtsilikat, Glimmer und Gemischen hiervon, aufweisen.

In einer bevorzugten Ausführungsform weist der Gleitlack mindestens einen weiteren Festschmierstoff ausgewählt aus der Gruppe bestehend aus Molybdändisulfid, Graphen (hexagonal), Zinn(IV)-Sulfid, Zink(II)-Sulfid, Wolframdisulfid, Metallsulfid, Calciumphosphat, Silikat und Schichtsilikat, Glimmer und Gemischen hiervon, auf.

Falls vorhanden beträgt die Menge an dem mindestens einen weiteren Festschmierstoff, vorzugsweise an Festschmierstoffen ausgewählt aus der Gruppe bestehend aus Polytetrafluorethylen (PTFE), Molybdändisulfid, Graphen (hexagonal), Zinn(IV)-Sulfid, Zink(II)-Sulfid, Wolframdisulfid, Metallsulfid, Calciumphosphat, Silikat und Schichtsilikat, Glimmer und Gemischen hiervon, insbesondere ausgewählt aus der Gruppe bestehend aus Molybdändisulfid, Graphen (hexagonal), Zinn(IV)-Sulfid, Zink(II)-Sulfid, Wolframdisulfid, Metallsulfid, Calciumphosphat, Silikat und Schichtsilikat, Glimmer und Gemischen hiervon, von 0,5 Gew.% bis 10 Gew.%, bevorzugt von 1 Gew.% bis 8 Gew.%, bezogen auf das Gesamtgewicht des Gleitlacks.

Das Festschmierstoffgemisch weist bevorzugt eine Partikelgrößenverteilung gekennzeichnet durch einen D50-Wert gemäß ISO 13320, 2020-01-01 von 1 µm bis 20 µm, bevorzugt von 1 µm bis 10 µm, insbesondere von 2 µm bis 6 µm auf.

Weiter bevorzugt weist das Festschmierstoffgemisch eine Partikelgrößenverteilung gekennzeichnet durch einen D90-Wert gemäß ISO 13320, 2020-01-01 von 1 µm bis 20 µm, bevorzugt von 5 µm bis 15 µm, insbesondere von 5 µm bis 10 µm auf.

### Bindemittel b)

Der Gleitlack enthält erfindungsgemäß mindestens ein Bindemittel b). Bindemittel sind Substanzen, die die im Gleitlack enthaltenen Festschmierstoffe zumindest teilweise zu umhüllen und miteinander und gegebenenfalls mit einem Substrat zu verbinden in der Lage sind. Vorteilhaft an der Verwendung eines Bindemittels ist, dass es eine gute Anbindung der Festschmierstoffe an die zu schmierende Substratoberfläche ermöglicht.

Das Bindemittel b) kann ein organisches Bindemittel und/oder ein anorganisches Bindemittel sein. Dabei sind organische Bindemittel bevorzugt. Wird ein anorganisches Bindemittel eingesetzt, so sind dreidimensional verknüpfte anorganische Materialien bevorzugt. Besonders bevorzugte anorganische Bindemittel sind Wasserglas, Phosphate und/oder Titanate.

Bevorzugte Bindemittel b) sind ausgewählt aus der Gruppe bestehend aus organischen Polymeren, bevorzugt Polyimid (PI), insbesondere Polyamidimid (PAI), Polyurethan (PU), Epoxidharz, Phenolharz, Phenoxyharz, Melaminharz, Acrylatharz, Polyetheretherketon (PEEK), Polyetherketon (PEK), Polyethersulfon (PES), Polyisocyanat, Polyol, Silikonharz und deren Mischungen. Besonders bevorzugte Bindemittel b) sind ausgewählt aus der Gruppe bestehend aus Polyamidimid (PAI), Polyurethan (PU), Melaminharz, Polyisocyanat und deren Mischungen. Ganz besonders bevorzugt ist dabei Polyurethan (PU).

In einer weiteren Ausführungsform ist das Bindemittel mindestens ein organisches Bindemittel, das mit mindestens einem Quervernetzer vernetzt wurde.

In einer weiteren bevorzugten Ausführungsform ist das Bindemittel mindestens ein organisches Bindemittel, ausgewählt aus Polyimid (PI), bevorzugt Polyamidimid (PAI), Polyurethan (PU), Epoxidharz, Phenolharz, Phenoxyharz, Melaminharz, Acrylatharz, Polyisocyanat, Polyol, Silikonharz und deren Mischungen, das mit mindestens einem Quervernetzer vernetzt wurde, wobei der Quervernetzer vorzugsweise ausgewählt ist aus der Gruppe bestehend aus organischen Epoxiden (EP), insbesondere Bis-Epoxiden, organischen Isocyanaten und deren Dimeren und Trimeren, blockierten organischen Isocyanaten und deren Dimeren und Trimeren und Carbodiimiden, insbesondere N,N'-Dicyclohexylcarbodiimid und deren Mischungen.

In einer bevorzugten Ausführungsform der Erfindung ist das Polyisocyanat ein blockiertes organisches Isocyanat. Bevorzugte blockierte organische Isocyanate sind mit Phenol-, Alkohol-, Oxim-, Lactam-, Amid-, Pyrazol-, Triazol- und/oder Harnstoffgruppen blockiert.

Erfindungsgemäß weist der Gleitlack das Bindemittel b) in einer Menge von 5 bis 60 Gew.%, bevorzugt von 10 bis 50 Gew.%, insbesondere von 12 bis 35 Gew.%, auf, jeweils bezogen auf Gesamtgewicht des Gleitlacks. Dabei werden bei der Bestimmung der Menge des Bindemittels b) aus den Rohstoffen stammende eventuell vorhandene Lösungsmittel nicht berücksichtigt. Stattdessen werden die Lösungsmittel mengenmäßig der Komponente c) zugerechnet. Relevant für die Bestimmung der Menge des Bindemittels b) ist mithin seine Trockenmasse. Auch eventuell vorhandene aus anderen Rohstoffen stammende Lösungsmittel werden mengenmäßig nicht den Rohstoffen sondern der Komponente c) zugerechnet.

### Lösungsmittel c)

Der Gleitlack enthält erfindungsgemäß mindestens ein Lösungsmittel c). Lösungsmittel sind Flüssigkeiten bei 23°C und 1,013 bar, die mindestens einen anderen Bestandteil des Gleitlacks (fest oder flüssig bei 23°C und 1,013 bar) zumindest teilweise auflösen können. Vorzugsweise erfolgt dabei keine chemische Reaktion zwischen dem Lösungsmittel und dem zumindest teilweise gelösten Stoff.

Lösungsmittel können zusätzlich auch dispergierend wirken. So kann eine Flüssigkeit im Gleitlack gleichzeitig sowohl als Lösungsmittel als auch als Dispergiermittel fungieren. Gleitlacke enthalten nämlich üblicherweise sowohl Stoffe, die von einer als Lösungsmittel zugebenen Substanz zumindest teilweise gelöst werden, als auch Stoffe, die von dieser Substanz nicht gelöst aber dispergiert werden. Für diese Stoffe fungiert das Lösungsmittel dann als Dispergiermittel.

Vorzugsweise weist das Lösungsmittel einen Siedepunkt bei 23°C und 1,013 bar von 30°C bis 300°C, bevorzugt von 20°C bis 250°C auf.

Ein Gleitlack, der Lösungsmittel enthält, wird in der Praxis auch als Nasslack bezeichnet. Bevorzugte Lösungsmittel sind ausgewählt aus der Gruppe bestehend aus Wasser, aromatischem Lösungsmittel, vorzugsweise Xylol, Ethyl- und/oder Butylacetaten; Alkohol, vorzugsweise Ethanol, Butanol und/oder Glykol, insbesondere Butyldiglykol; Ether; Ester, vorzugsweise Lacton, insbesondere Butyrolacton, Butylacetat und/oder Ethylacetat; Keton, vorzugsweise Methylethylketon (MEK), Methylisobutylketon (MIBK); Pyrrolidon, vorzugsweise Methyl-2-pyrrolidon (NMP), N-Ethyl-2-pyrrolidon (NEP), N-Butyl-2-pyrrolidon (NBP); Keton, Morpholin, vorzugsweise N-Acetyl- oder N-Formylmorpholidon (NFM); Amid, vorzugsweise Dimethylformamid (DMF), N,N-Dimethylacetamid (DMAc) und/oder 3-Methoxy-N,N-dimethylpropanamid (CAS 53185-52-7).

Besonders bevorzugte Lösungsmittel sind ausgewählt aus der Gruppe bestehend aus Wasser, aromatischem Lösungsmittel, vorzugsweise Xylol, Ethyl- und/oder Butylacetaten; Alkohol, vorzugsweise Ethanol, Butanol und/oder Glykol, insbesondere Butyldiglykol; Keton, vorzugsweise Methylethylketon (MEK), Methylisobutylketon (MIBK); Pyrrolidon, vorzugsweise Methyl-2-pyrrolidon (NMP), N-Ethyl-2-pyrrolidon (NEP), N-Butyl-2-pyrrolidon (NBP); Morpholin, vorzugsweise N-Acetyl- oder N-Formylmorpholidon (NFM); Amid, vorzugsweise Dimethylformamid (DMF), N,N-Dimethylacetamid (DMAc) und/oder 3-Methoxy-N,N-dimethylpropanamid (CAS 53185-52-7).

Ganz besonders bevorzugte Lösungsmittel sind ausgewählt aus der Gruppe bestehend aus Wasser und/oder Glykol, insbesondere Butyldiglykol.

Die Menge des Lösungsmittels c) bezogen auf das Gesamtgewicht des Gleitlacks beträgt von 50 Gew.% bis 80 Gew.%, bevorzugt von 60 Gew.% bis 80 Gew.%, noch bevorzugter von 65 Gew.% bis 80 Gew.%.

### Weitere Komponenten d) des Gleitlacks

Der Gleitlack kann auch weitere Komponenten enthalten, beispielsweise weitere Festschmierstoffe, Pigmente, Entschäumer, Füllstoffe, Rheologieadditive und/oder Dispergieradditive. Pigmente sind farbgebende, feste, im Gleitlack unlösliche Substanzen. Ein bevorzugtes Pigment ist Ruß. Die weiteren Festschmierstoffe sind verschieden von den Komponenten a1), a2), a3) und a4). Rheologieadditive sind Additive, die das Fließverhalten und das Absetzverhalten des Gleitlacks positiv beeinflussen. Der Gleitlack kann auch Füllstoffe enthalten, beispielsweise Carbonate und/oder Mica. Weist eine in dem erfindungsgemäßen Gleitlack eingesetzte Komponente mehrere Wirkungen auf, z.B. als Rheologieadditiv und Dispergieradditiv, so wird sie mengenmäßig nur einmal berücksichtigt.

In einer bevorzugten Ausführungsform der Erfindung enthält der Gleitlack die weiteren Komponenten d), insbesondere weitere Festschmierstoffe, Pigmente, Entschäumer, Füllstoffe, Rheologieadditive und/oder Dispergieradditive in einer Menge von 1 Gew.% bis 15 Gew.%, bevorzugt 3 Gew.% bis 10 Gew.%, insbesondere 5 Gew.% bis 7 Gew.%, bezogen auf das Gesamtgewicht des Gleitlacks. Dabei wird bei der Bestimmung der Menge der weiteren Komponenten d) ihre Trockenmasse verwendet.

### Weitere bevorzugte Ausführungsformen des Gleitlacks

In einer bevorzugten Ausführungsform der Erfindung enthält der Gleitlack kein Polytetrafluorethylen und/oder Polytetrafluorethylen in einer Menge von weniger als 4 Gew.%, bevorzugt weniger als 1 Gew.%, insbesondere weniger als 0,1 Gew.%, bezogen auf das Gesamtgewicht des Gleitlacks.

Der Gehalt an Polytetrafluorethylen in dem Gleitlack wird vorzugsweise anhand der Schmelzenthalpie von PTFE unter Verwendung der Norm DIN EN ISO 11357-1, Ausgabe 2008.04 bestimmt. Die Messung wird zweckmäßigerweise wie folgt durchgeführt. Zunächst wird das Lösungsmittel entfernt. Anschließend werden 20 mg des Rückstandes in einen DSC Tiegel aus Aluminium mit 25 µl Füllmenge eingewogen und bei einer Heizrate von 10 K/min auf 600°C aufgeheizt. Das endotherme Signal zwischen 300 und 450°C wird integriert, die Fläche des Peaks (Enthalpie Probe) ist der Menge an PTFE in dem Rückstand proportional. Zur Kalibrierung wird ein reines PTFE Mikropulver (Teilchengröße D50-Wert nach ASTM D4894-19 = 5 µm, Schmelzflussindex bei 372°C/2,16 kg/2.095 mm nach ASTM D1238-23a) = 0,5 g/10 min) analog vermessen (Enthalpie Referenz). Der Gehalt an PTFE im Gleitlack ergibt sich nach folgender Gleichung: (Enthalpie Probe)/(Enthalpie Referenz) * Anteil Rückstand in Gew.% = PTFE-Gehalt in Gew.%

In einer weiteren bevorzugten Ausführungsform der Erfindung ist die Menge des Pigmentvolumens im Gleitlack derart, dass die Pigment-Volumen-Konzentration (PVK) einer aus dem Gleitlack hergestellten Gleitlackschicht, bestimmt nach PVK = V (P) + V (F) + V (a1 + a2 + a3 + a4) / V (P) + V (F) + V (a1 + a2 + a3 + a4) + V (BM) * 100%, wobei V (P) = Volumen Pigmente, V (F) = Volumen Füllstoffe, V (BM) = Trockenfilmvolumina aller Bindemittel, V (a1 + a2 + a3 + a4) = Summe der Volumina der Festschmierstoffe a1) bis a4) ist, von 15 % bis 65 %, noch bevorzugter von 20 % bis 60 %, noch bevorzugter von 25 % bis 50 % beträgt. Es wurde in praktischen Versuchen gefunden, dass bei diesen PVK-Werten die Verschleißbeständigkeit der Gleitlackschicht mindestens zufriedenstellend ist. In einer bevorzugten Ausführungsform der Erfindung ist die Menge des Pigmentvolumens im Gleitlack derart, dass die Pigment-Volumen-Konzentration (PVK) einer aus dem Gleitlack hergestellten Gleitlackschicht von 30 % bis 50 %, insbesondere 30 % bis 45 % beträgt.

In einer bevorzugten Ausführungsform der Erfindung besteht der Gleitlack aus
a1) Talkum in einer Menge von 2 Gew.% bis 15 Gew.%, bevorzugt von 3 Gew.% bis 13 Gew.%, insbesondere von 4 Gew.% bis 11 Gew.%, bezogen auf das Gesamtgewicht des Gleitlacks,
a2) Graphit in einer Menge von 0,5 Gew.% bis 10 Gew.%, bevorzugt von 0,5 Gew.% bis 6 Gew.%, noch bevorzugter von 0,5 Gew.% bis 4 Gew.%, insbesondere von 0,5 Gew.% bis 2 Gew.%, bezogen auf das Gesamtgewicht des Gleitlacks,
a3) Polymethylharnstoff in einer Menge von 0,5 Gew.% bis 10 Gew.%, bevorzugt von 2 Gew.% bis 9 Gew.%, noch bevorzugter von 3 Gew.% bis 8 Gew.%, insbesondere von 3 Gew.% bis 7 Gew.%, bezogen auf das Gesamtgewicht des Gleitlacks,
a4) Bornitrid in einer Menge von 0,8 Gew.% bis 5 Gew.%, bevorzugt von 0,8 Gew.% bis 4 Gew.%, noch bevorzugter von 0,8 Gew.% bis 3 Gew.%, insbesondere von 0,8 Gew.% bis 2 Gew.%, bezogen auf das Gesamtgewicht des Gleitlacks,
b) mindestens einem Bindemittel in einer Menge von 5 Gew.% bis 60 Gew.%, noch bevorzugter von 10 Gew.% bis 50 Gew.%, insbesondere von 12 Gew.% bis 35 Gew.%, bezogen auf das Gesamtgewicht des Gleitlacks, sowie
c) mindestens einem Lösungsmittel in einer Menge von 50 Gew.% bis 80 Gew.%, bevorzugt von 60 Gew.% bis 80 Gew.%, insbesondere von 65 Gew.% bis 80 Gew.%, bezogen auf das Gesamtgewicht des Gleitlacks.
d) mindestens einer weiteren Komponente ausgewählt aus weiteren Festschmierstoffen, Pigmenten, Entschäumern, Füllstoffen, Rheologieadditiven, Dispergieradditiven und Gemischen hiervon in einer Menge von 1 Gew.% bis 15 Gew.%, bevorzugt 3 Gew.% bis 10 Gew.%, insbesondere 5 Gew.% bis 7 Gew.%, bezogen auf das Gesamtgewicht des Gleitlacks.

In einer weiteren bevorzugten Ausführungsform der Erfindung betragen im erfindungsgemäßen Gleitlack die Anteile an
a1) Talkum von 3 Gew.% bis 80 Gew.%, bevorzugt von 5 Gew.% bis 80 Gew.%, noch bevorzugter von 10 Gew.% bis 70 Gew.%, noch bevorzugter von 30 Gew.% bis 70 Gew.%, insbesondere von 50 Gew.% bis 60 Gew.%, bezogen auf das Gesamtgewicht der Festschmierstoffe a1), a2), a3) und a4) zusammen genommen,
a2) Graphit von 3 Gew.% bis 80 Gew.%, bevorzugt von 3 Gew.% bis 60 Gew.%, noch bevorzugter von 3 Gew.% bis 30 Gew.% noch bevorzugter von 3 Gew.% bis 15 Gew.%, insbesondere von 3 Gew.% bis 10 Gew.%, bezogen auf das Gesamtgewicht der Festschmierstoffe a1), a2), a3) und a4) zusammen genommen,
a3) Polymethylharnstoff von 1,5 Gew.% bis 70 Gew.%, bevorzugt von 5 Gew.% bis 60 Gew.%, noch bevorzugter von 15 Gew.% bis 50 Gew.% noch bevorzugter von 25 Gew.% bis 45 Gew.% insbesondere von 25 Gew.% bis 40 Gew.%, bezogen auf das Gesamtgewicht der Festschmierstoffe a1), a2), a3) und a4) zusammen genommen, und
a4) Bornitrid von 3 Gew.% bis 70 Gew.%, bevorzugt von 3 Gew.% bis 40 Gew.%, noch bevorzugter von 3 Gew.% bis 25 Gew.% , insbesondere von 3 Gew.% bis 10 Gew.%, bezogen auf das Gesamtgewicht der Festschmierstoffe a1), a2), a3) und a4) zusammen genommen,

In einer weiteren bevorzugten Ausführungsform der Erfindung enthält der Gleitlack
a) 4 Gew.% bis 40 Gew.%, bevorzugt 4 Gew.% bis 30 Gew.%, noch bevorzugter von 5 Gew.% bis 30 Gew.%, insbesondere von 10 Gew.% bis 20 Gew.%, bezogen auf das Gesamtgewicht des Gleitlacks, ein Festschmierstoffgemisch mindestens enthaltend
   a1) Talkum in einer Menge von 2 Gew.% bis 15 Gew.%, bevorzugt von 3 Gew.% bis 13 Gew.%, insbesondere von 4 Gew.% bis 11 Gew.%, bezogen auf das Gesamtgewicht des Gleitlacks,
   a2) Graphit in einer Menge von 0,5 Gew.% bis 10 Gew.%, bevorzugt von 0,5 Gew.% bis 6 Gew.%, noch bevorzugter von 0,5 Gew.% bis 4 Gew.%, insbesondere von 0,5 Gew.% bis 2 Gew.%, bezogen auf das Gesamtgewicht des Gleitlacks,
   a3) Polymethylharnstoff in einer Menge von 0,5 Gew.% bis 10 Gew.%, bevorzugt von 2 Gew.% bis 9 Gew.%, noch bevorzugter von 3 Gew.% bis 8 Gew.%, insbesondere von 3 Gew.% bis 7 Gew.%, bezogen auf das Gesamtgewicht des Gleitlacks,
   a4) Bornitrid in einer Menge von 0,8 Gew.% bis 5 Gew.%, bevorzugt von 0,8 Gew.% bis 4 Gew.%, noch bevorzugter von 0,8 Gew.% bis 3 Gew.%, insbesondere von 0,8 Gew.% bis 2 Gew.%, bezogen auf das Gesamtgewicht des Gleitlacks, sowie
b) mindestens ein Bindemittel in einer Menge von 5 Gew.% bis 60 Gew.%, noch bevorzugter von 10 Gew.% bis 50 Gew.%, insbesondere von 12 Gew.% bis 35 Gew.%, jeweils bezogen auf Gesamtgewicht des Gleitlacks,
c) mindestens ein Lösungsmittel in einer Menge von 50 Gew.% bis 80 Gew.%, bevorzugt von 60 Gew.% bis 80 Gew.%, noch bevorzugter von 65 Gew.% bis 80 Gew.%, bezogen auf das Gesamtgewicht des Gleitlacks.

In einer ganz besonders bevorzugten Ausführungsform der Erfindung enthält der Gleitlack
a) 8,3 Gew.% bis 20 Gew.%, bezogen auf das Gesamtgewicht des Gleitlacks, ein Festschmierstoffgemisch mindestens enthaltend
   a1) Talkum in einer Menge von 4 Gew.% bis 11 Gew.%, bezogen auf das Gesamtgewicht des Gleitlacks,
   a2) Graphit in einer Menge von 0,5 Gew.% bis 2 Gew.%, bezogen auf das Gesamtgewicht des Gleitlacks,
   a3) Polymethylharnstoff in einer Menge von 3 Gew.% bis 8 Gew.%, bezogen auf das Gesamtgewicht des Gleitlacks,
   a4) Bornitrid in einer Menge von 0,8 Gew.% bis 2 Gew.%, bezogen auf das Gesamtgewicht des Gleitlacks, sowie
b) mindestens ein Bindemittel in einer Menge von 12 Gew.% bis 35 Gew.%, bezogen auf das Gesamtgewicht des Gleitlacks,
c) mindestens ein Lösungsmittel in einer Menge von 65 Gew.% bis 80 Gew.%, bezogen auf das Gesamtgewicht des Gleitlacks.

In einer weiteren bevorzugten Ausführungsform der Erfindung beträgt die Menge der Komponenten a1), a2), a3), a4), b) und c) zusammengenommen, bezogen auf das Gesamtgewicht des Gleitlacks mindestens 64 Gew.%, beispielsweise von 64 Gew.% bis 100 Gew.%, bevorzugt 75 Gew.% bis 100 Gew.%.

### Pulverlacke

Ein weiterer Gegenstand der Erfindung ist ein Pulverlack umfassend
a) ein Festschmierstoffgemisch mindestens enthaltend
   a1) Talkum,
   a2) Graphit,
   a3) Polymethylharnstoff,
   a4) Bornitrid,
b) mindestens ein Bindemittel.

In einer bevorzugten Ausführungsform beträgt die Menge an Lösungsmittel bezogen auf das Gesamtgewicht des Pulverlacks weniger als 4 Gew.%, bevorzugt weniger als 1 Gew.%.

Bevorzugte Ausführungsformen für den erfindungsgemäßen Pulverlack umfassen die vorangehend und nachfolgend für den erfindungsgemäßen Gleitlack beschriebenen Ausführungsformen mutatis mutandis.

Bevorzugt enthält der Pulverlack
a1) Talkum in einer Menge von 4 Gew.% bis 60 Gew.%, bevorzugt von 6 Gew.% bis 52 Gew.%, insbesondere von 8 Gew.% bis 44 Gew.%, bezogen auf das Gesamtgewicht des Pulverlacks,
a2) Graphit in einer Menge von 1 Gew.% bis 40 Gew.%, bevorzugt von 1 Gew.% bis 24 Gew.%, noch bevorzugter von 1 Gew.% bis 16 Gew.%, insbesondere von 1 Gew.% bis 8 Gew.%, bezogen auf das Gesamtgewicht des Pulverlacks,
a3) Polymethylharnstoff in einer Menge von 1 Gew.% bis 40 Gew.%, bevorzugt von 4 Gew.% bis 36 Gew.%, noch bevorzugter von 6 Gew.% bis 32 Gew.%, insbesondere von 6 Gew.% bis 28 Gew.%, bezogen auf das Gesamtgewicht des Pulverlacks,
a4) Bornitrid in einer Menge von 1,6 Gew.% bis 20 Gew.%, bevorzugt von 1,6 Gew.% bis 16 Gew.%, noch bevorzugter von 1,6 Gew.% bis 12 Gew.%, insbesondere von 1,6 Gew.% bis 8 Gew.%, bezogen auf das Gesamtgewicht des Pulverlacks,
b) mindestens ein Bindemittel in einer Menge von 10 Gew.% bis 92 Gew.%, noch bevorzugter von 20 Gew.% bis 90 Gew.%, insbesondere von 30 bis 90 Gew.%, bezogen auf das Gesamtgewicht des Pulverlacks.

Der Pulverlack kann hergestellt werden unter Verwendung eines Festschmierstoffgemischs mindestens enthaltend
a1) Talkum,
a2) Graphit,
a3) Polymethylharnstoff,
a4) Bornitrid.

### Gleitlackschicht

Ein weiterer Gegenstand der Erfindung ist eine Gleitlackschicht umfassend
a) ein Festschmierstoffgemisch mindestens enthaltend
   a1) Talkum,
   a2) Graphit,
   a3) Polymethylharnstoff,
   a4) Bornitrid,
b) mindestens ein zumindest teilweise ausgehärtetes Bindemittel.

In einer bevorzugten Ausführungsform beträgt die Menge an Lösungsmittel bezogen auf das

Gesamtgewicht der Gleitlackschicht weniger als 4 Gew.%, noch bevorzugter weniger als 1 Gew.%. In der erfindungsgemäßen Gleitlackschicht ist das Bindemittel zumindest teilweise ausgehärtet. Vorzugsweise ist das Bindemittel vollständig ausgehärtet.

Die erfindungsgemäße Gleitlackschicht wird bevorzugt aus dem erfindungsgemäßen Gleitlack hergestellt. Die Herstellung umfasst vorzugweise das Aufbringen des Gleitlacks auf einen Grundkörper und das zumindest teilweise Aushärten des Bindemittels b). Dabei erfolgt das Aushärten des Bindemittels b) bevorzugt nach dem Aufbringen des Gleitlacks auf den Grundkörper. Das Aushärten des mindestens einen Bindemittels b) kann durch einen physikalischen Aushärtungsprozess, beispielsweise durch einen Trocknungsprozess und/oder chemischen Aushärtungsprozess erfolgen. In der Regel verdunstet das im Gleitlack enthaltende Lösemittel während des Aushärtens.

Bevorzugte Ausführungsformen für die erfindungsgemäße Gleitlackschicht umfassen die vorangehend und nachfolgend für den erfindungsgemäßen Gleitlack beschriebenen Ausführungsformen mutatis mutandis.

Bevorzugt enthält die Gleitlackschicht
a1) Talkum in einer Menge von 4 Gew.% bis 60 Gew.%, bevorzugt von 6 Gew.% bis 52 Gew.%, insbesondere von 8 Gew.% bis 44 Gew.%, bezogen auf das Gesamtgewicht der Gleitlackschicht,
a2) Graphit in einer Menge von 1 Gew.% bis 40 Gew.%, bevorzugt von 1 Gew.% bis 24 Gew.%, noch bevorzugter von 1 Gew.% bis 16 Gew.%, insbesondere von 1 Gew.% bis 8 Gew.%, bezogen auf das Gesamtgewicht der Gleitlackschicht,
a3) Polymethylharnstoff in einer Menge von 1 Gew.% bis 40 Gew.%, bevorzugt von 4 Gew.% bis 36 Gew.%, noch bevorzugter von 6 Gew.% bis 32 Gew.%, insbesondere von 6 Gew.% bis 28 Gew.%, bezogen auf das Gesamtgewicht der Gleitlackschicht,
a4) Bornitrid in einer Menge von 1,6 Gew.% bis 20 Gew.%, bevorzugt von 1,6 Gew.% bis 16 Gew.%, noch bevorzugter von 1,6 Gew.% bis 12 Gew.%, insbesondere von 1,6 Gew.% bis 8 Gew.%, bezogen auf das Gesamtgewicht der Gleitlackschicht,
b) mindestens ein Bindemittel in einer Menge von 10 Gew.% bis 92 Gew.%, noch bevorzugter von 20 Gew.% bis 90 Gew.%, insbesondere von 30 Gew.% bis 90 Gew.%, bezogen auf das Gesamtgewicht des Pulverlacks.

In einer bevorzugten Ausführungsform der Erfindung enthält die erfindungsgemäße Gleitlackschicht kein Polytetrafluorethylen und/oder Polytetrafluorethylen in einer Menge von weniger als 8 Gew.%, bevorzugt weniger als 2 Gew.%, insbesondere weniger als 0,2 Gew.%, bezogen auf das Gesamtgewicht der Gleitlackschicht.

Vorzugsweise beträgt die Dicke der Gleitlackschicht nicht mehr als 70 µm, beispielsweise 1 µm bis 70 µm, noch bevorzugter von 10 µm bis 40 nm. Gemessen wird die Schichtdicke mikroskopisch über Schliffpräparation quer zum Gleitlack gemäß DIN EN ISO 2808 (2019). Bei magnetisierbaren, ferromagnetischen Grundkörpern wird das magnetinduktive Verfahren verwendet. Bei nicht magnetisierbaren Grundkörpern wird nach der Methode 5.4.4.2, Variante Querschnitt gemessen.

In einer bevorzugten Ausführungsform der Erfindung beträgt die Pigment-Volumen-Konzentration (PVK) der Gleitlackschicht bestimmt nach PVK = V (P) + V (F) + V (a1 + a2 + a3 + a4) / V (P) + V (F) + V (a1 + a2 + a3 + a4) + V (BM) * 100%, wobei V (P) = Volumen Pigmente, V (F) = Volumen Füllstoffe, V (BM) = Trockenfilmvolumina aller Bindemittel, V (a1 + a2 + a3 + a4) = Summe der Volumina der Festschmierstoffe a1) bis a4) ist, von 15 % bis 65 %, noch bevorzugter von 20 % bis 60 %, noch bevorzugter von 25 % bis 50 %. Es wurde in praktischen Versuchen gefunden, dass bei diesen PVK-Werten die Verschleißbeständigkeit der Gleitlackschicht mindestens zufriedenstellend ist. In einer bevorzugten Ausführungsform der Erfindung beträgt die Pigment-Volumen-Konzentration (PVK) der Gleitlackschicht von 30 % bis 50 %, insbesondere 30 % bis 45 %. Es wurde in praktischen Versuchen gefunden, dass bei PVK-Werten unter 50 % die Festschmierstoffe und ggf. vorhandene Füllstoffe besonders gut benetzt und deshalb im Gleitlack besonders stabil eingebunden sind. Gleichzeitig können bei Pigment-Volumen-Konzentration (PVK) der Gleitlackschicht von 30 % und höher besonders gute Verschleißbeständigkeiten erzielt werden.

### Verwendungen und Verfahren

Ein weiterer Gegenstand der vorliegenden Erfindung umfasst die Verwendung eines erfindungsgemäßen Gleitlacks, eines erfindungsgemäßen Pulverlacks und/oder einer erfindungsgemäßen Gleitlackschicht gemäß einer oder mehrerer der vorangehend und nachfolgend beschriebenen Ausführungsformen zur Schmierung eines tribologischen Systems, insbesondere eines tribologischen Systems im Automobilbereich. Ganz besonders bevorzugt ist dabei die Verwendung des erfindungsgemäßen Gleitlacks.

Ein tribologisches System ist ganz allgemein ein technisches System, welches Bewegung durch Kontakte ermöglicht, beeinflusst oder verhindert und das als wesentliche Komponenten die an einer tribologischen Beanspruchung beteiligten Wirkflächenpaare und das auf diese einwirkende Beanspruchungskollektiv umfasst. Typischerweise umfasst ein tribologisches System wenigstens einen Grundkörper, der sich in Kontakt und Relativbewegung mit wenigstens einem Gegenkörper befindet. Das Beanspruchungskollektiv umfasst die auf die Körper aufgebrachte Belastung sowie die Bewegungsverhältnisse, den Reibungszustand und die Temperatur. Zwischen den beiden Körpern befindet sich häufig ein Zwischenstoff, wobei es sich speziell um gezielt zur Verschleißminderung eingebrachte Gleitlacke, Pulverlacke und/oder Gleitlackschichten handeln kann.

Bevorzugt wird der erfindungsgemäße Gleitlack, der erfindungsgemäße Pulverlack und/oder die erfindungsgemäße Gleitlackschicht zur Schmierung eines Grundkörpers eines tribologischen Systems, insbesondere eines tribologischen Systems im Automobilbereich verwendet. Bevorzugte Grundkörper weisen Elastomere und/oder metallische Materialien auf. Der Grundkörper kann sowohl metallische als auch nichtmetallische Werkstoffe enthalten, bevorzugt Kompositmaterialien, Aluminium, Aluminiumlegierungen, Stahl-, Edelstahl- und Gusswerkstoffe, Buntmetalle, Kunststoffe, faserverstärkte Kunststoffe und/oder Polymere, insbesondere TPV (Thermoplastische Vulkanisate). In einer bevorzugten Ausführungsform weist das tribologische System einen Grundkörper auf, der als Basismaterial Polymere, insbesondere Elastomere und/oder TPV (Thermoplastische Vulkanisate) enthält.

In einer besonders bevorzugten Ausführungsform enthält der Grundkörper als Basismaterial Polymere, insbesondere Elastomere und/oder TPV (Thermoplastische Vulkanisate). Weiter besonders bevorzugt enthält der Grundkörper als Basismaterial Polymere, insbesondere Elastomere und/oder TPV (Thermoplastische Vulkanisate), die Flockfasern aufweisen. Dabei bedeutet der Begriff "als Basismaterial", dass der Grundkörper zu mehr als 50 Gew.% das jeweilige Material aufweist. Thermoplastische Vulkanisate (TPVs) sind thermoplastische Elastomere (TPEs), die während ihrer Herstellung einem Vulkanisationsprozess unterzogen werden. Dieser Prozess führt zur Vernetzung der Polymerketten, was die Festigkeit, Haltbarkeit und Flexibilität des Endprodukts erhöht. Flockfasern (auch Flockung oder Flocking genannt) sind Stapelfasern (Faserlänge 0,1 bis 1 mm, bevorzugt 0,2 bis 0,8 mm) auf eine Oberfläche aufgebracht, um ihr eine samtige, weiche oder texturierte Oberfläche zu verleihen. Bevorzugt enthalten die Flockfasern Kunststoffe, wie Nylon, Rayon oder Polyester. Die Flockfasern sind vorzugsweise durch einen elektrostatischen Prozess auf den Grundkörper aufgebracht. Bevorzugt umfasst der Prozess folgende Schritte:
- Auftragen eines Klebers: Zunächst wird ein Klebstoff und/oder eine Haftschicht auf das Basismaterial aufgebracht.
- Aufbringen der Flockfasern: Die Flockfasern werden elektrostatisch geladen. Hierdurch können sie sich senkrecht zur Klebeschicht ausrichten und daran haften bleiben. Diese Methode ermöglicht, dass die Fasern gleichmäßig und vertikal auf die Oberfläche aufgebracht werden, wodurch eine gleichmäßige und dichte Textur entsteht.
- Trocknung: Nach dem Aufbringen der Fasern wird der Kleber getrocknet oder gehärtet, um die Flockfasern dauerhaft zu fixieren.

In einer besonders bevorzugten Ausführungsform enthält der Grundkörper als Basismaterial Polymere, insbesondere Elastomere und/oder TPV (Thermoplastische Vulkanisate), die Flockfasern aufweisen, wobei die Flockfasern durch einen elektrostatischen Prozess auf den Grundkörper aufgebracht sind umfassend folgende Schritte:
- es wird ein Klebstoff und/oder eine Haftschicht auf den Grundkörper aufgebracht,
- elektrostatisch geladene Flockfasern werden auf den mit Klebstoff und/oder einer Haftschicht versehenen Grundkörper aufgebracht,
- der Kleber wird getrocknet und/oder gehärtet, um die Flockfasern zu fixieren.

Beflockung ist vielseitig einsetzbar und bietet sowohl ästhetische Vorteile, als auch funktionelle Eigenschaften wie rutschfeste Oberflächen, verbesserte Haptik und Schallabsorption.

In einer bevorzugten Ausführungsform wird der erfindungsgemäße Gleitlack, der erfindungsgemäße Pulverlack und/oder die erfindungsgemäße Gleitlackschicht zur Schmierung eines Grundkörpers eines tribologischen Systems, insbesondere eines tribologischen Systems im Automobilbereich, verwendet wobei der Grundkörper ausgewählt ist aus Türdichtungen, bevorzugt Basisprofilen von Türdichtungen, insbesondere beflockten Basisprofilen von Türdichtungen, Klimakompressionskolben, Lagerschalen, Gleitlagerschalen, Dichtungsringen und/oder Profildichtungen.

In einer weiteren bevorzugten Ausführungsform weist der Gegenkörper im tribologischen System Kompositmaterialien, Aluminium, Aluminiumlegierungen, Stahl-, Edelstahl- und Gusswerkstoffe, Buntmetalle, Kunststoffe, faserverstärkte Kunststoffe, Polymere, Glas und/oder mit Klarlack beschichtetes Metall und/oder deren Gemische auf. Besonders bevorzugte Polymere sind Polyoxymethylen (POM) und/oder Polyamide. Ferner ist denkbar, dass der Gegenkörper ebenfalls mit einem Gleitlack und/oder mit einem mit Klarlack beschichtet ist. Bevorzugt enthält der Gegenkörper als Werkstoff Kunststoffe, Polymere, Glas und/oder mit Klarlack beschichtetes Metall und/oder deren Gemische. Glas und/oder mit Klarlack beschichtetes Metall ist dabei besonders bevorzugt. Durch die Auswahl dieser Werkstoffe kann Gewicht eingespart und Kosten reduziert werden.

In einer besonders bevorzugten Ausführungsform der Erfindung wird der erfindungsgemäße Gleitlack, der erfindungsgemäße Pulverlack und/oder die erfindungsgemäße Gleitlackschicht zur Schmierung eines Grundkörpers eines tribologischen Systems verwendet, wobei der Grundkörper als Basismaterial Polymere, insbesondere Elastomere und/oder TPV (Thermoplastische Vulkanisate), enthält, die Flockfasern aufweisen. Wie oben dargelegt, ist die Verwendung des Gleitlacks dabei besonders bevorzugt.

In einer besonders bevorzugten Ausführungsform der Erfindung enthält der Grundkörper als Werkstoff Polymere, bevorzugt Elastomere und/oder TPV (Thermoplastische Vulkanisate) insbesondere Elastomere und/oder TPV (Thermoplastische Vulkanisate), die Flockfasern aufweisen und der Gegenkörper Glas und/oder mit Klarlack beschichtete Metall. Diese Kombinationen haben sich, insbesondere für Bauteile im Automobilbereich, als besonders zweckmäßig erwiesen, da sie eine besonders gute Eigenschaftskombination hinsichtlich Kosten, Funktionalität und Gewicht darstellen.

Ein weiterer Gegenstand der vorliegenden Erfindung umfasst ein Verfahren zum Schmieren von tribologischen Systemen umfassend folgende Schritte:
1) ein Gleitlack umfassend
   a1) Talkum in einer Menge von 2 Gew.% bis 15 Gew.%, bevorzugt von 3 Gew.% bis 13 Gew.%, insbesondere von 4 Gew.% bis 11 Gew.%, bezogen auf das Gesamtgewicht des Gleitlacks,
   a2) Graphit in einer Menge von 0,5 Gew.% bis 10 Gew.%, bevorzugt von 0,5 Gew.% bis 6 Gew.%, noch bevorzugter von 0,5 Gew.% bis 4 Gew.%, insbesondere von 0,5 Gew.% bis 2 Gew.%, bezogen auf das Gesamtgewicht des Gleitlacks,
   a3) Polymethylharnstoff in einer Menge von 0,5 Gew.% bis 10 Gew.%, bevorzugt von 2 Gew.% bis 9 Gew.%, noch bevorzugter von 3 Gew.% bis 8 Gew.%, insbesondere von 3 Gew.% bis 7 Gew.%, bezogen auf das Gesamtgewicht des Gleitlacks,
   a4) Bornitrid in einer Menge von 0,8 Gew.% bis 5 Gew.%, bevorzugt von 0,8 Gew.% bis 4 Gew.%, noch bevorzugter von 0,8 Gew.% bis 3 Gew.%, insbesondere von 0,8 Gew.% bis 2 Gew.%, bezogen auf das Gesamtgewicht des Gleitlacks,
   b) mindestens ein Bindemittel in einer Menge von 5 Gew.% bis 60 Gew.%, noch bevorzugter von 10 Gew.% bis 50 Gew.%, insbesondere von 12 Gew.% bis 35 Gew.%, bezogen auf das Gesamtgewicht des Gleitlacks, sowie
   c) mindestens ein Lösungsmittel in einer Menge von 50 Gew.% bis 80 Gew.%, bevorzugt von 60 Gew.% bis 80 Gew.%, insbesondere von 65 Gew.% bis 80 Gew.%, bezogen auf das Gesamtgewicht des Gleitlacks,
   wird auf mindestens eine Oberfläche eines Grundkörpers eines tribologischen Systems aufgebracht;
2) das mindestens eine Bindemittel b) wird zumindest teilweise ausgehärtet.

Für das erfindungsgemäße Verfahren wird bevorzugt ein Gleitlack gemäß einer oder mehrerer der vorangehend und nachfolgend genannten Ausführungsformen verwendet. Das Aufbringen des Gleitlacks auf die mindestens eine Oberfläche des Grundkörpers kann durch bekannte Methoden erfolgen, beispielsweise durch Sprühen, Tauchen, Zentrifugieren, Trommeln und/oder Drucken. Bevorzugt sind dabei Applikationsverfahren ausgewählt aus Spritzverfahren, auch elektrostatisch unterstützt, Rakeln, Dispensing, Pinseln, Tauchen, Tauchzentrifugieren, Trommeln, Aufrollen, Druckverfahren wie etwa Sieb- oder Tampondruck.

Das Aushärten des mindestens einen Bindemittels b) kann durch einen physikalischen Aushärtungsprozess, insbesondere durch einen Trocknungsprozess und/oder chemischen Aushärtungsprozess erfolgen.

Bevorzugte Ausführungsformen der erfindungsgemäßen Verwendung und/oder des erfindungsgemäßen Verfahrens umfassen vorangehend oder nachfolgend beschriebene Ausführungsformen des erfindungsgemäßen Gleitlacks mutatis mutandis.

### Tribologisches System

Ein weiterer Gegenstand der Erfindung ist ein tribologisches System umfassend mindestens einen Grundkörper, der sich in Kontakt und Relativbewegung mit wenigstens einem Gegenkörper befindet, wobei der Grundkörper und gegebenenfalls auch der Gegenkörper auf mindestens einer Oberfläche einen erfindungsgemäßen Gleitlack, einen erfindungsgemäßen Pulverlack und/oder eine erfindungsgemäße Gleitlackschicht enthält.

Bevorzugte Grundkörper und Gegenkörper sind die vorangehend und nachfolgend für die erfindungsgemäßen Verfahren und Verwendungen beschriebenen.

Der Grundkörper kann üblichen Vorbehandlungen wie Sandstrahlen, Phosphatieren, Einglätten, Aufrauhen unterworfen werden, um beispielsweise die Haftung des Gleitlacks und die Korrosionsbeständigkeit des beschichteten Grundkörpers zu verbessern.

Die Erfindung wird im Folgenden anhand mehrerer nicht beschränkender Beispiele näher erläutert.

### 1. Verwendete Materialien

### Basislack A

| **Art des Rohstoffes** | **Funktion** | **Einwaage** | **Trockenmasse** | **Lösemittel** |
|---|---|---|---|---|
| VE-Wasser | Verdünnung, Einstellung auf Verarbeitungs-viskosität, Löse- und Dispergiermittel | 33,91 | | 33,91 |
| Polysaccharid und Bentonit | Verdicker / Rheologieeinstellung | 12,11 | 0,49 | 11,72 |
| Silikonhaltige und silikonfreie Tenside | für Benetzung und Entschäumung / Dispergierhilfsmittel | 6,79 | 3,05 | 3,74 |
| Ruß | Pigment | 6,78 | 2,00 | 4,78 |
| Algizid, Fungizid | Konservierungsmittel | 0,27 | 0,01 | 0,26 |
| Aliphatische PolyesterPolyurethanDispersion | Bindemittel | 37,25 | 14,90 | 22,35 |
| UV-Schutz, UV-Stabilisator | Lichtschutzmittel | 1,36 | 0,71 | 0,65 |
| Organische Base | pH-Wert-Einstellung | 0,07 | 0,07 | 0,00 |
| Fluoreszierendes Additiv | UV-Indikator | 1,36 | 0,45 | 0,91 |
| Polymethylharnstoff | Festschmierstoff | 0,00 | | |
| Talkum | Festschmierstoff | 0,00 | | |
| Bornitrid | Festschmierstoff | 0,00 | | |
| Graphit | Festschmierstoff | 0,00 | | |
| | | **100,000** | 21,7 | 78,3 |
| 100,00 | | | | |

| | D50 | D90 | Dichte | OH-Gehalt |
|---|---|---|---|---|
| Polymethylharnstoff | 4 µm | 8 µm | 1,47 g/cm³ | 0,27% |
| Talkum | 5 µm | - | 2,78 g/cm³ | - |
| Bornitrid | 6 µm | 11 µm | 2,25 g/cm³ | - |
| Graphit | 5 µm | 10 µm | 2,26 g/cm³ | - |

Bei der Bestimmung der Mengenanteile der Komponenten des Gleitlacks werden aus den Rohstoffen stammende Lösungsmittel mengenmäßig der Komponente c) (Lösungsmittel) zugerechnet. Relevant für die Bestimmung der jeweiligen Mengen der Komponenten des Gleitlacks, mit Ausnahme der Komponente c), ist mithin ihre Trockenmasse.

Der Basislack A wird durch aufeinanderfolgendes Mischen der Komponenten hergestellt. Nach dem Vorlegen von VE-Wasser werden unter Rühren mit einer Zahnscheibe die Rheologieadditive sowie ein Tensid zugegeben. Im weiteren Herstellungsprozess werden weitere Tenside, Konservierungsmittel, UV-Indikator und UV-Schutz sowie Bindemittel zugegeben und mittels Rotor-Stator-System geschert. Am Ende erfolgt die pH-Werteinstellung mittels Base unter Rühren.

Ausgehend von Basislack A werden Vergleichslacke und erfindungsgemäße Lacke durch Einmischen der jeweiligen Festschmierstoffe und Scheren mittels Rotor-Stator-System hergestellt.

### Erfindungsgemäßer Gleitack 1:

| **Art des Rohstoffes** | **Funktion** | **Einwaage** | **Trockenmasse** | **Lösemittel** |
|---|---|---|---|---|
| VE-Wasser | Verdünnung, Einstellung auf Verarbeitungs-viskosität, Löse- und Dispergiermittel | 33,093 | | 33,09 |
| Polysaccharid und Bentonit | Verdicker + Rheologieeinstellung | 9,35 | 0,36 | 8,99 |
| Silikonhaltige und silikonfreie Tenside | für Benetzung und Entschäumung / Dispergiermittel | 5,02 | 2,26 | 2,76 |
| Ruß | farbgebende Komponente | 5,017 | 1,48 | 3,54 |
| Algizid, Fungizid | Konservierungsmittel | 0,200 | 0,01 | 0,19 |
| Aliphatische PolyesterPolyurethanDispersion | Bindemittel | 27,565 | 11,03 | 16,54 |
| UV-Schutz, UV-Stabilisator | Lichtschutzmittel | 1,006 | 0,52 | 0,48 |
| Organische Base | pH-Wert-Einstellung | 0,052 | 0,05 | 0,00 |
| Fluoreszierendes Additiv | UV-Indikator | 1,006 | 0,33 | 0,67 |
| Polymethyl-harnstoff | Festschmierstoff | 6,000 | 6,00 | 0,00 |
| Talkum | Festschmierstoff | 10,000 | 10,00 | 0,00 |
| Bornitrid | Festschmierstoff | 1,000 | 1,00 | 0,00 |
| Graphit | Festschmierstoff | 1,000 | 1,00 | 0,00 |
| Summe | | **100,000** | 34,04 | 65,96 |
| 100 | | | | |

Der erfindungsgemäße Gleitlack 1 wird durch aufeinanderfolgendes (mit Ausnahme der Festschmierstoffe) Mischen der Komponenten hergestellt. Nach dem Vorlegen von VE-Wasser werden unter Rühren mit einer Zahnscheibe die Rheologieadditive sowie ein Tensid zugegeben. Danach erfolgt die Zugabe der Festschmierstoffe, welche anschließend mittels Rotor-Stator-System geschert werden. Im weiteren Herstellungsprozess werden weitere Tenside, Konservierungsmittel, UV-Indikator und UV-Schutz sowie Bindemittel zugegeben und mittels Rotor-Stator-System geschert. Am Ende erfolgt die pH-Werteinstellung mittels Base unter Rühren. Die feine Verteilung der Festschmierstoffe wird durch eine Grindometerprüfung sichergestellt. Sollten noch grobe Partikel vorliegen, wird nochmal mit dem Rotor-Stator-System geschert.

Analog dieser Vorgehensweise werden die in der nachfolgenden Tabelle dargestellten Vergleichslacke und die erfindungsgemäßen Gleitlacke 2a und 2b hergestellt.

| | Festschmierstoff | CAS-Nr.: | Anteil Festschmierstoff [Gew.%] |
|---|---|---|---|
| Vergleichslack A | PTFE | CAS-Nr.: 9002-84-0 | 8,0 |
| Vergleichslack 1 | Talkum | (Mg3H2(SiO3)4), CAS-Nr.: 14807-96-6 | 12,5 |
| Vergleichslack 2 | Graphit | Makrokristalliner Naturgraphit, CAS-Nr.: 999999-99-4 | 10,2 |
| Vergleichslack 3 | Polymethyl-harnstoff | CAS-Nr.: 9011-05-6 | 6,5 |
| Vergleichslack 4 | Bornitrid | CAS-Nr.: 1303-86-2 | 10,5 |
| Erfindungsgemäßer Gleitlack 1 | Kombination Talkum/ Bornitrid/Graphit/ Polymethyl-harnstoff | s.o. | 10/1/1/6 |
| Erfindungsgemäßer Gleitlack 2a | Kombination Talkum/ Bornitrid/Graphit/ Polymethyl-harnstoff | s.o. | 5/1/1/6 |
| Erfindungsgemäßer Gleitlack 2b | Kombination Talkum/ Bornitrid/Graphit/ Polymethyl-harnstoff | s.o. | 5/1/1/3 |

Die Menge Festschmierstoff [Gew.%] ist bezogen auf das Gesamtgewicht Gleitlack (Basislack + Festschmierstoffe).

Im Folgenden ist die Zusammensetzung der erfindungsgemäßen Gleitlacke 2a und 2b tabellarisch dargestellt:

### Erfindungsgemäßer Lack 2a (PVK 33,3)

| **Art des Rohstoffes** | **Funktion** | Ei**nwaage** | **Trockenmasse** | **LM** |
|---|---|---|---|---|
| VE-Wasser | Verdünnung, Einstellung auf Verarbeitungs-viskosität, Löse- und Dispergiermittel | 44,70 | | 44,70 |
| Polysaccharid und Bentonit | Verdicker + Rheologieeinstellung | 3,50 | 0,05 | 3,45 |
| Silikonhaltige und silikonfreie Tenside | für Benetzung und Entschäumung / Dispergiermittel | 3,50 | 1,81 | 1,69 |
| Ruß | farbgebende Komponente | 5,00 | 1,25 | 3,75 |
| Algizid, Fungizid | Konservierungsmittel | 0,20 | 0,01 | 0,19 |
| Aliphatische PolyesterPolyurethanDispersion | Bindemittel | 31,00 | 12,40 | 18,60 |
| UV-Schutz, UV-Stabilisator | Lichtschutzmittel | 1,00 | 0,52 | 0,48 |
| Organische Base | pH-Wert-Einstellung | 0,1 | 0,095 | 0,005 |
| Fluoreszierendes Additiv | UV-Indikator | 1,00 | 0,33 | 0,67 |
| Polymethyl-harnstoff | Festschmierstoff | 3,0 | 3,0 | 0,00 |
| Talkum | Festschmierstoff | 5,0 | 5,0 | 0,00 |
| Bornitrid | Festschmierstoff | 1,0 | 1,0 | 0,00 |
| Graphit | Festschmierstoff | 1,0 | 1,0 | 0,00 |
| | | **100,000** | 26,465 | 73,535 |
| 100 | | | | |

### Erfindungsgemäßer Lack 2b (PVK = 42,7)

| **Art des Rohstoffes** | **Funktion** | Ei**nwaage** | **Trockenmasse** | **LM** |
|---|---|---|---|---|
| VE-Wasser | Verdünnung, Einstellung auf Verarbeitungs-viskosität, Löse- und/oder Dispergiermittel | 44,70 | | 44,70 |
| Polysaccharid und Bentonit | Verdicker + Rheologieeinstellung | 3,50 | 0,05 | 3,45 |
| Silikonhaltige und silikonfreie Tenside | für Benetzung und Entschäumung / Dispergiermittel | 3,50 | 1,81 | 1,69 |
| Ruß | farbgebende Komponente | 5,00 | 1,25 | 3,75 |
| Algizid, Fungizid | Konservierungsmittel | 0,20 | 0,01 | 0,19 |
| Aliphatische PolyesterPolyurethanDispersion | Bindemittel | 28,00 | 11,20 | 16,80 |
| UV-Schutz, UV-Stabilisator | Lichtschutzmittel | 1,00 | 0,52 | 0,48 |
| Organische Base | pH-Wert-Einstellung | 0,10 | 0,095 | 0,005 |
| Fluoreszierendes Additiv | UV-Indikator | 1,00 | 0,33 | 0,67 |
| Polymethyl-harnstoff | Festschmierstoff | 6,00 | 6,00 | 0,00 |
| Talkum | Festschmierstoff | 5,00 | 5,00 | 0,00 |
| Bornitrid | Festschmierstoff | 1,00 | 1,00 | 0,00 |
| Graphit | Festschmierstoff | 1,00 | 1,00 | 0,00 |
| | | **100,000** | 28,265 | 71,735 |

Aus den erfindungsgemäßen Gleitlacken und den Vergleichslacken werden Gleitlackschichten wie folgt hergestellt: Auf gereinigten und plasma-aktivierten Elastomerkörpern (EPDM) werden die Lacke mittels Sprühpistole appliziert (Variante A). Ebenso kommen Flock-Materialien zum Einsatz, welche nicht vorbehandelt werden (Variante B). Die Trocknung erfolgt nach kurzer Ablüftphase (Raumtemperatur) bei 105°C für 10-20 Min. Die resultierenden Gleitlackschichten weisen eine Dicke von ca. 10 µm auf.

### 2. Prüfung nach Zins Ziegler mit dem SSP-04 (Stick-Slip-Prüfstand)

Gleitlackschichten aus Beispiel 1 (Variante A) werden nach Zins Ziegler geprüft (VDA 230-206 Teil I von 2005). Es werden die folgenden Parameter verwendet:

| | |
|---|---|
| Laststufen: | 5, 10, 20 N |
| Geschwindigkeiten: | 1, 5, 10 mm/s |
| Bewegungsart | oszillierend |
| Anzahl Perioden | 3 |
| vs. Glas | EPDM (Variante A) |
| Temperatur: | RT, 80°C |

### 2.1 Die Prüfung bei Raumtemperatur ergibt folgende Ergebnisse:

| Gleitlackschicht erhalten mit Variante A aus | Festschmierstoffe | Reibwert | Avg. RPZ | Max. RPZ |
|---|---|---|---|---|
| Vergleichslack A | PTFE | 0,888 | 2,0 | 3,0 |
| Vergleichslack 1 | Talkum | 0,364 | 3,4 | 5,0 |
| Vergleichslack 2 | Graphit | 1,101 | 2,0 | 3,0 |
| Vergleichslack 3 | Polymethylharnstoff | 0,389 | 2,7 | 5,0 |
| Vergleichslack 4 | Bornitrid | 0,677 | 1,8 | 2,0 |
| erfindungsgemäßem Gleitlack 1 | Kombination | 0,348 | 1,9 | 2,0 |

Es zeigt sich, dass die erfindungsgemäße Gleitlackschicht eine sehr geringe RPZ zeigt, die sogar geringer als die von PTFE ist. Darüber hinaus zeigt die erfindungsgemäße Gleitlackschicht hervorragende Reibwerte. Die Reibwerte werden über alle Perioden gemittelt.

### 2.2 Die Prüfung bei 80°C ergibt folgende Ergebnisse:

| Gleitlackschicht erhalten mit Variante A aus | Rohstoff | Reibwert | Avg. RPZ | Max. RPZ |
|---|---|---|---|---|
| Vergleichslack A | PTFE | 1,474 | 1,3 | 2,0 |
| Vergleichslack 1 | Talkum | 0,186 | 1,5 | 3,0 |

| | | | | |
|---|---|---|---|---|
| Vergleichslack 2 | Graphit | 1,085 | 1,4 | 2,0 |
| Vergleichslack 3 | Polymethylharnstoff | 1,397 | 1,4 | 2,0 |
| Vergleichslack 4 | Bornitrid | 0,748 | 1,6 | 2,0 |
| erfindungsgemäßem Gleitlack 1 | Kombination | 0,361 | 1,3 | 2,0 |

Es zeigt sich, dass die erfindungsgemäße Gleitlackschicht eine sehr geringe RPZ zeigt, die sogar geringer als die von PTFE ist. Darüber hinaus zeigt die erfindungsgemäße Gleitlackschicht hervorragende Reibwerte. Die Reibwerte werden über alle Perioden gemittelt.

### 3. Zwicki-Reibwertprüfung

Es werden die Reibwerte anhand der Zwicki-Reibwertprüfung ermittelt. Folgende Prüfbedingungen werden eingesetzt:

| | |
|---|---|
| Last | 10 N |
| Geschwindigkeit | 1,67 mm/s |
| vs. Glas | EPDM (Variante A) |

| Gleitlackschicht erhalten mit Variante A aus | Rohstoff | Reibwert |
|---|---|---|
| Vergleichslack A | PTFE | 0,4 |
| Vergleichslack 1 | Talkum | 0,6 |
| Vergleichslack 2 | Graphit | 0,5 |
| Vergleichslack 3 | Polymethylharnstoff | 0,4 |
| Vergleichslack 4 | Bornitrid | 0,26 |
| erfindungsgemäßem Gleitlack 1 | Kombination | 0,27 |

Es zeigt sich, dass die erfindungsgemäße Gleitlackschicht sehr geringe Reibwerte zeigt, die BN gleichwertig und sogar geringer als die von PTFE sind.

### 4. Verschleißprüfung

Es werden Verschleißprüfungen mittels Crockmeter durchgeführt. Die Prüfungen erfolgen wie folgt:
**1. Vorbereitung:** Es werden Elastomerkörper in Form von Elastomerstreifen mit den zu prüfenden Gleitlacken beschichtet, ausgehärtet und trocken auf den Prüfstand gelegt. Die resultierenden Gleitlackschichten weisen eine Dicke von ca. 10 µm auf.
**2. Durchführung des Tests:** Der Prüfstand führt dann oszillierende Bewegungen (max 10 000 Zyklen oder bis zum Verschleiß der Gleitlackschicht) aus, die dazu dienen, den beschichteten Elastomerstreifen gegen einen Reibpartner (Textilstempel / Glasmeißel) zu bewegen. Diese Bewegungen werden mit einer Geschwindigkeit von 10 cm/s und unter einer Auflagekraft von 5 N oder 10 N durchgeführt.
**3. Auswertung der Ergebnisse:** Nach dem Test (Doppelbestimmung) wird die Gleitlackschicht visuell auf Veränderungen (Verschleiß/Abrieb) untersucht. Es wird die Anzahl der Zyklen bis zum Vollverschleiß bestimmt.

Die Ergebnisse sind in der folgenden Tabelle dargestellt.

| Gleitlackschicht erhalten mit Variante A aus | Rohstoff | Crockmeter (Textil), 10 N | Crockmeter (Glas), 5 N |
|---|---|---|---|
| Vergleichslack A | PTFE | ≥ 10.000 | ≥ 10.000 |
| Vergleichslack 1 | Talkum | ≥ 10.000 | 0 3.125 |
| Vergleichslack 2 | Graphit | Ø 350 | Ø 30 (sofort Abrieb) |
| Vergleichslack 3 | Polymethylharnstoff | ≥ 10.000 | 0 600 |
| Vergleichslack 4 | Bornitrid | ≥ 10.000 | 03.300 |
| erfindungsgemäßem Gleitlack 1 | Kombination | ≥ 10.000 | 09.035 |

Es zeigt sich, dass die erfindungsgemäße Gleitlackschicht sehr nahe an die Performance von PTFE herankommt. Überraschend war, dass die erfindungsgemäße Gleitlackschicht deutlich verbesserte Abriebwerte beim Test gegen Glas verglichen mit Gleitlackschichten, die nur einzelne Festschmierstoffe enthalten, zeigt. Auch der vergleichsweise niedrige Abriebwert von Graphit kann durch Einbindung in das Festschmierstoffgemisch deutlich verbessert werden.

### 5. Herstellung und Prüfung weiterer erfindungsgemäßer Gleitlackschichten

Es werden die erfindungsgemäßen Gleitlacke 3 bis 20 ausgehend von Basislack A durch unterschiedliche Mengen der Festschmierstoffe resultierend in unterschiedlichen PVK-Werten der aus ihnen hergestellten Gleitlackschichten, wie in der nachfolgenden Tabelle angegeben, hergestellt.

Aus diesen Gleitlacken (GL) werden Gleitlackschichten hergestellt und Verschleißprüfungen mittels Crockmeter durchgeführt.

Die Ergebnisse sind in der folgenden Tabelle dargestellt.

| Gleitlack -schicht erhalten aus | Talkum | Graphit | Bornitrid | Polymethyl-harnstoff- | Anteil Ruß | PVK mit Ruß berechnet | Crockmeter Glas 5 N |
|---|---|---|---|---|---|---|---|
| GL 3 | 1 | 1 | 5 | 6 | 1,25 | 43,9 | 7100 |
| GL 4 | 10 | 1 | 5 | 6 | 1,25 | 52,4 | 8545 |
| GL 5 | 1 | 10 | 5 | 0,5 | 1,25 | 44,6 | 3665 |
| GL 6 | 10 | 10 | 1 | 6 | 1,25 | 56,7 | 9950 |
| GL 7 | 5,5 | 5,5 | 3 | 3,25 | 1,25 | 46,5 | 2865 |
| GL 8 | 5,5 | 5,5 | 3 | 3,25 | 1,25 | 46,5 | 2150 |
| GL 9 | 10 | 1 | 1 | 0,5 | 1,25 | 36,5 | 3647 |
| GL 10 | 10 | 10 | 5 | 6 | 1,25 | 59,7 | 5443 |
| GL 11 | 1 | 1 | 1 | 0,5 | 1,25 | 20,5 | 645 |
| GL 12 | 1 | 1 | 5 | 0,5 | 1,25 | 29,9 | 1220 |
| GL 13 | 1 | 10 | 1 | 0,5 | 1,25 | 38,9 | 2067 |
| GL 14 | 1 | 10 | 5 | 6 | 1,25 | 53,8 | 2555 |
| GL 15 | 10 | 1 | 1 | 6 | 1,25 | 48,2 | 9035 |
| GL 16 | 1 | 10 | 1 | 6 | 1,25 | 49,8 | 3145 |
| GL 17 | 1 | 1 | 1 | 6 | 1,25 | 38,1 | 4525 |
| GL 18 | 10 | 10 | 5 | 0,5 | 1,25 | 52,9 | 4010 |
| GL 19 | 10 | 1 | 5 | 0,5 | 1,25 | 42,7 | 4125 |
| GL 20 | 10 | 10 | 1 | 0,5 | 1,25 | 48,8 | 3370 |

Die in der Tabelle genannten Gleitlacke sind erfindungsgemäße Gleitlacke.

Für die Bestimmung der PVK werden folgende Dichten verwendet.

| | Dichte (g/cm³) | |
|---|---|---|
| Polymethylharnstoff | 1,47 | |
| Talkum | 2,70 | |
| Graphit | 2,26 | |
| Bornitrid | 2,25 | |
| Ruß | 1,12 | |
| Aliphatische PolyesterPolyurethan-Dispersion | 1,05 | |

Es zeigt sich, dass bei den untersuchten Gleitlackschichten die Verschleißbeständigkeit zumindest zufriedenstellend ist.

Die aus den erfindungsgemäßen Gleitlacken 3 bis 20 erhaltenen Gleitlackschichten und Vergleichslack A werden nach Zins Ziegler geprüft (VDA 230-206 Teil I von 2005). Die Ergebnisse sind in der nachfolgenden Tabelle gezeigt.

### EPDM,

### Raumtemperatur

| Gleitlackschicht erhalten aus | Max RPZ | Mittlere RPZ | Dyn. Reibkraft | Dyn. COF | stat./dyn ratio |
|---|---|---|---|---|---|
| GL 3 | 2 | 1,7 | 3,233 | 0,301 | 1,06 |
| GL 4 | 3 | 1,8 | 4,205 | 0,378 | 1,05 |
| GL 5 | 2 | 1,7 | 6,842 | 0,584 | 1,07 |
| GL 6 | 3 | 1,8 | 3,283 | 0,291 | 1,07 |
| GL 7 | 2 | 1,7 | 6,947 | 0,595 | 1,06 |
| GL 8 | 3 | 2,0 | 8,268 | 0,713 | 1,06 |
| GL 9 | 3 | 1,9 | 10,291 | 0,890 | 1,06 |
| GL 10 | 3 | 1,8 | 6,517 | 0,569 | 1,06 |
| GL 11 | 3 | 1,8 | 12,175 | 1,093 | 1,06 |
| GL 12 | 2 | 1,7 | 10,211 | 0,879 | 1,06 |
| GL 13 | 3 | 1,8 | 11,400 | 1,000 | 1,05 |
| GL 14 | 2 | 1,7 | 6,572 | 0,583 | 1,05 |
| GL 15 | 2 | 1,7 | 6,069 | 0,535 | 1,05 |
| GL 16 | 2 | 1,7 | 5,433 | 0,466 | 1,06 |
| GL 17 | 2 | 1,7 | 5,987 | 0,527 | 1,06 |
| GL 18 | 3 | 2,2 | 4,192 | 0,368 | 1,09 |
| GL 19 | 3 | 1,8 | 7,464 | 0,648 | 1,06 |
| GL 20 | 2 | 1,7 | 5,996 | 0,511 | 1,06 |
| Vergleichslack A | 3 | 2,0 | 11,083 | 0,884 | 1,05 |

Es zeigt sich, dass bei den untersuchten Gleitlackschichten das Reibwert- und Stick-Slip-Verhalten zumindest zufriedenstellend ist.

Die aus den erfindungsgemäßen Gleitlacken 3 bis 20 erhaltenen Gleitlackschichten und der Vergleichslack A werden mittels Crockmeter geprüft. Die Ergebnisse sind in der nachfolgenden Tabelle gezeigt.

| Gleitlackschicht erhalten aus | Glas 5 N | PVK mit Ruß berechnet |
|---|---|---|
| GL 3 | 7100 | 36,7 |
| GL 4 | 8545 | 44,9 |
| GL 5 | 3665 | 37,4 |
| GL 6 | 9950 | 49,2 |
| GL 7 | 2865 | 39,2 |
| GL 8 | 2150 | 39,2 |
| GL 9 | 3647 | 29,9 |
| GL 10 | 5443 | 52,3 |
| GL 11 | 645 | 16,1 |
| GL 12 | 1220 | 24,0 |
| GL 13 | 2067 | 32,1 |
| GL 14 | 2555 | 46,3 |
| GL 15 | 9035 | 40,8 |
| GL 16 | 3145 | 42,4 |
| GL 17 | 4525 | 31,3 |
| GL 18 | 4010 | 45,4 |
| GL 19 | 4125 | 35,5 |
| GL 20 | 3370 | 41,4 |
| Vergleichslack A | 10000 | 34,1 |

Es zeigt sich, dass bei den untersuchten Gleitlackschichten die Abriebfestigkeit zumindest zufriedenstellend ist.

### 6. Prüfung ausgewählter Gleitlackschichten

Es werden ausgewählte Gleitlackschichten mittels Zins-Ziegler geprüft.

### Flock, RT und 80°C

### (Variante B)

| Gleitlackschicht erhalten aus | Max RPZ | Mittlere RPZ | Dyn. Reibkraft | Dyn. COF | Temperatur |
|---|---|---|---|---|---|
| GL 3 | 3 | 1,8 | 2,508 | 0,257 | Raumtemperatur |
| GL 15 | 2 | 1,7 | 2,516 | 0,220 | Raumtemperatur |
| Vergleichslack A | 2 | 1,8 | 2,625 | 0,225 | Raumtemperatur |
| GL 3 | 3 | 1,6 | 0,185 | 0,282 | 80°C |
| GL 15 | 2 | 1,5 | 2,751 | 0,245 | 80°C |
| Vergleichslack A | 2 | 1,4 | 2,804 | 0,247 | 80°C |

| Gleitlackschicht erhalten aus | Stat. Reibkraft | Stat. COF | stat./dyn ratio | PVK mit Ruß berechnet | Temperatur |
|---|---|---|---|---|---|
| GL 3 | 2,965 | 0,273 | 1,06 | 36,7 | Raumtemperatur |
| GL 15 | 2,653 | 0,233 | 1,06 | 40,8 | Raumtemperatur |
| Vergleichslack A | 2,766 | 0,248 | 1,10 | 34,1 | Raumtemperatur |
| GL 3 | 3,351 | 0,298 | 1,06 | 36,7 | 80°C |
| GL 15 | 2,899 | 0,260 | 1,06 | 40,8 | 80°C |
| Vergleichslack A | 2,892 | 0,262 | 1,06 | 34,1 | 80°C |

Es zeigt sich, dass die untersuchten Gleitlackschichten die Performance des Vergleichslacks A nahezu erreichen bzw. z.T. sogar übertreffen.

### Messmethoden

Raumtemperatur: Die Raumtemperatur (RT) beträgt 23°C.

### Partikelgröße

Die Partikelgröße wird, sofern nicht anders ausdrücklich angegeben, bestimmt gemäß ISO 13320, 2020-01-01. Die hier verwendete Partikelgröße bezieht sich auf den Durchmesser des Partikels. Im Allgemeinen hat eine Verbindung oder Probe eine Vielzahl von Partikeln unterschiedlicher Größe, so dass die Partikelgröße der Verbindung oder Probe eine Verteilung ist. Die hier verwendete Partikelgröße bezieht sich, sofern nicht anders ausdrücklich angegeben, auf die maximale Größe, die die angegebenen Volumen%, z.B. 90 bzw. 50 Volumen% der Partikel in der Verbindung oder Probe haben, d.h., die Größe entspricht der größten Größe z.B. von 90 bzw. 50 Volumen% der kleinsten Partikel. (oft als x90 bezeichnet; siehe Methode ISO 13320-1:1999 für weitere Details). Geräte und Methoden zur Bestimmung der Partikelgröße von Pestiziden sind einer Fachperson bekannt. Beispiele für geeignete Geräte sind Malvern Mastersizer S, CILAS, COULTER COUNTER, Helos (SYMPATEC). Es wird trocken gemessen. Zur Auswertung wird die Fraunhofer Theorie verwendet.

### Pigment-Volumen-Konzentration (PVK)

Die Pigment-Volumen-Konzentration (PVK) ist das Verhältnis von Pigmentvolumen zum Gesamtvolumen des (getrockneten) Anstrichfilms [Vol.-%]; dabei wird unter Pigmentvolumen die Summe aus Pigment- und Füllstoffvolumina verstanden. Die PVK ist beschrieben in "Lackformulierung und Lackrezeptur" von Bodo Müller/Ulrich Poth erschienen als. 2. Ausgabe, 2005, im Vincentz Verlag. Für die vorliegende Erfindung wird eine etwas abgewandelte Formel verwendet: PVK = V (P) + V (F) + V (a1 + a2 + a3 + a4) / V (P) + V (F) + V (a1 + a2 + a3 + a4) + V (BM) * 100%, wobei
V (P) = Volumen Pigmente,
V (F) = Volumen Füllstoffe,
V (BM) = Trockenfilmvolumina aller Bindemittel,
V (a1 + a2 + a3 + a4) = Summe der Volumina der Festschmierstoffe a1) bis a4)

Sind weitere Festschmierstoffe vorhanden, werden sie zu der Menge der Festschmierstoffe a1) bis a4) gerechnet.

### Trockenmasse

Die Bestimmung der Trockenmasse erfolgt nach DIN EN ISO 3251:2019 Paints, varnishes and plastics - Determination of non-volatile-matter content (ISO 3251:2019).

### Anteil an extrahierbaren Bestandteilen

Die Bestimmung des Anteils an extrahierbaren Bestandteilen erfolgt gemäß ISO 6427:2014-08. Es werden die Versuchsbedingungen für Copolyamid gewählt.

## Patentansprüche

1. Gleitlack umfassend
a1) Talkum in einer Menge von 2 Gew.% bis 15 Gew.%, bezogen auf das Gesamtgewicht des Gleitlacks,
a2) Graphit in einer Menge von 0,5 Gew.% bis 10 Gew.%, bezogen auf das Gesamtgewicht des Gleitlacks,
a3) Polymethylharnstoff in einer Menge von 0,5 Gew.% bis 10 Gew.%, bezogen auf das Gesamtgewicht des Gleitlacks,
a4) Bornitrid in einer Menge von 0,8 Gew.% bis 5 Gew.%, bezogen auf das Gesamtgewicht des Gleitlacks,
b) mindestens ein Bindemittel in einer Menge von 5 Gew.% bis 60 Gew.%, bezogen auf das Gesamtgewicht des Gleitlacks, sowie
c) mindestens ein Lösungsmittel in einer Menge von 50 Gew.% bis 80 Gew.%, bezogen auf das Gesamtgewicht des Gleitlacks.

2. Gleitlack nach Anspruch 1, **dadurch gekennzeichnet, dass** die Menge an Talkum a1), bezogen auf das Gesamtgewicht des Gleitlacks von 3 Gew.% bis 13 Gew.%, insbesondere von 4 Gew.% bis 11 Gew.% beträgt.

3. Gleitlack nach Anspruch 1 oder 2, **dadurch gekennzeichnet, dass** das Talkum a1) eine Partikelgrößenverteilung **gekennzeichnet durch** einen D50-Wert gemäß ISO 13320, 2020-01-01 von 1 µm bis 20 µm, bevorzugt von 1 µm bis 10 µm, insbesondere von 2 µm bis 6 µm aufweist, und/oder eine Partikelgrößenverteilung **gekennzeichnet durch** einen D90-Wert gemäß ISO 13320, 2020-01-01 von 1 µm bis 20 µm, bevorzugt von 5 µm bis 15 µm, insbesondere von 5 µm bis 10 µm aufweist.

4. Gleitlack nach einem oder mehreren der vorangegangenen Ansprüche, **dadurch gekennzeichnet, dass** die Menge an Graphit a2), bezogen auf das Gesamtgewicht des Gleitlacks von 0,5 Gew.% bis 6 Gew.%, noch bevorzugter von 0,5 Gew.% bis 4 Gew.%, insbesondere von 0,5 Gew.% bis 2 Gew.% beträgt.

5. Gleitlack nach einem oder mehreren der vorangegangenen Ansprüche, **dadurch gekennzeichnet, dass** das Graphit a2) eine Partikelgrößenverteilung **gekennzeichnet durch** einen D50-Wert gemäß ISO 13320, 2020-01-01 von 1 µm bis 20 µm, bevorzugt von 1 µm bis 10 µm, insbesondere von 2 µm bis 6 µm aufweist und/oder dass das Graphit eine Partikelgrößenverteilung **gekennzeichnet durch** einen D90-Wert gemäß ISO 13320, 2020-01-01 von 1 µm bis 20 µm, bevorzugt von 5 µm bis 15 µm, insbesondere von 5 µm bis 10 µm aufweist.

6. Gleitlack nach einem oder mehreren der vorangegangenen Ansprüche, **dadurch gekennzeichnet, dass** die Menge an Polymethylharnstoff a3), bezogen auf das Gesamtgewicht des Gleitlacks von 2 Gew.% bis 9 Gew.%, noch bevorzugter von 3 Gew.% bis 8 Gew.%, insbesondere von 3 Gew.% bis 7 Gew.% beträgt.

7. Gleitlack nach einem oder mehreren der vorangegangenen Ansprüche, **dadurch gekennzeichnet, dass** der Polymethylharnstoff a3) eine Partikelgrößenverteilung **gekennzeichnet durch** einen D50-Wert gemäß ISO 13320, 2020-01-01 von 1 µm bis 20 µm, bevorzugt von 1 µm bis 10 µm, insbesondere von 2 µm bis 6 µm aufweist, und/oder der Polymethylharnstoff eine Partikelgrößenverteilung **gekennzeichnet durch** einen D90-Wert gemäß ISO 13320, 2020-01-01 von 1 µm bis 20 µm, bevorzugt von 5 µm bis 15 µm, insbesondere von 5 µm bis 10 µm aufweist.

8. Gleitlack nach einem oder mehreren der vorangegangenen Ansprüche, **dadurch gekennzeichnet, dass** der Polymethylharnstoff a3) einen OH-Gehalt von weniger als 0,3 Gew.%, beispielsweise von 0,01 Gew.% bis 0,3 Gew.%, bezogen auf das Gesamtgewicht des Polymethylharnstoffs aufweist.

9. Gleitlack nach einem oder mehreren der vorangegangenen Ansprüche, **dadurch gekennzeichnet, dass** die Menge an Bornitrid, bezogen auf das Gesamtgewicht des Gleitlacks von 0,8 Gew.% bis 4 Gew.%, noch bevorzugter von 0,8 Gew.% bis 3 Gew.%, insbesondere von 0,8 Gew.% bis 2 Gew.% beträgt.

10. Gleitlack nach einem oder mehreren der vorangegangenen Ansprüche, **dadurch gekennzeichnet, dass** der Gleitlack ein Festschmierstoffgemisch, umfassend Talkum, Graphit, Polymethylharnstoff und Bornitrid enthält, wobei die Menge des Festschmierstoffgemischs von 4 Gew.% bis 40 Gew.%, noch bevorzugter von 4 Gew.% bis 30 Gew.%, noch bevorzugter von 5 Gew.% bis 30 Gew.%, insbesondere von 10 Gew.% bis 20 Gew.%, bezogen auf Gesamtgewicht des Gleitlacks beträgt.

11. Gleitlack nach einem oder mehreren der vorangegangenen Ansprüche, **dadurch gekennzeichnet, dass** der Gleitlack kein Polytetrafluorethylen und/oder Polytetrafluorethylen in einer Menge von weniger als 4 Gew.%, bezogen auf das Gesamtgewicht des Gleitlacks enthält.

12. Gleitlack nach einem oder mehreren der vorangegangenen Ansprüche, **dadurch gekennzeichnet, dass** das Bindemittel b) ausgewählt ist aus der Gruppe bestehend aus Polyimid (PI), insbesondere Polyamidimid (PAI), Polyurethan (PU), Epoxidharz, Phenolharz, Phenoxyharz, Melaminharz, Acrylatharz, Polyetheretherketon (PEEK), Polyetherketon (PEK), Polyethersulfon (PES), Polyisocyanat, Polyol, Silikonharz und deren Mischungen.

13. Gleitlack nach einem oder mehreren der vorangegangenen Ansprüche, **dadurch gekennzeichnet, dass** das Lösungsmittel c) ausgewählt ist aus der Gruppe bestehend aus Wasser, aromatischem Lösungsmittel, vorzugsweise Xylol, Ethyl- und/oder Butylacetaten; Alkohol, vorzugsweise Ethanol, Butanol und/oder Glykol, insbesondere Butyldiglykol; Ether; Ester, vorzugsweise Lacton, insbesondere Butyrolacton, Butylacetat und/oder Ethylacetat; Keton, vorzugsweise Methylethylketon (MEK), Methylisobutylketon (MIBK); Pyrrolidon, vorzugsweise Methyl-2-pyrrolidon (NMP), N-Ethyl-2-pyrrolidon (NEP), N-Butyl-2-pyrrolidon (NBP); Keton, Morpholin, vorzugsweise N-Acetyl- oder N-Formylmorpholidon (NFM); Amid, vorzugsweise Dimethylformamid (DMF), N,N-Dimethylacetamid (DMAc) und/oder 3-Methoxy-N,N-dimethylpropanamid (CAS 53185-52-7).

14. Pulverlack umfassend
a1) Talkum in einer Menge von 4 Gew.% bis 60 Gew.%, bezogen auf das Gesamtgewicht des Pulverlacks,
a2) Graphit in einer Menge von 1 Gew.% bis 40 Gew.%, bezogen auf das Gesamtgewicht des Pulverlacks,
a3) Polymethylharnstoff in einer Menge von 1 Gew.% bis 40 Gew.%, bezogen auf das Gesamtgewicht des Pulverlacks,
a4) Bornitrid in einer Menge von 1,6 Gew.% bis 20 Gew.%, bezogen auf das Gesamtgewicht des Pulverlacks,
b) mindestens ein Bindemittel in einer Menge von 10 Gew.% bis 92 Gew.%, bezogen auf das Gesamtgewicht des Pulverlacks.

15. Gleitlackschicht hergestellt aus einem Gleitlack gemäß einem oder mehreren der Ansprüche 1 bis 13 umfassend
a1) Talkum in einer Menge von 4 Gew.% bis 60 Gew.%, bezogen auf das Gesamtgewicht der Gleitlackschicht,
a2) Graphit in einer Menge von 1 Gew.% bis 40 Gew.%, bezogen auf das Gesamtgewicht der Gleitlackschicht,
a3) Polymethylharnstoff in einer Menge von 1 Gew.% bis 40 Gew.%, bezogen auf das Gesamtgewicht der Gleitlackschicht,
a4) Bornitrid in einer Menge von 1,6 Gew.% bis 20 Gew.%, bezogen auf das Gesamtgewicht der Gleitlackschicht,
b) mindestens ein Bindemittel in einer Menge von 10 Gew.% bis 92 Gew.%, bezogen auf das Gesamtgewicht der Gleitlackschicht.

16. Gleitlackschicht nach Anspruch 15, **dadurch gekennzeichnet, dass** die Pigment- Volumen-Konzentration (PVK) der Gleitlackschicht bestimmt nach PVK = V (P) + V (F) + V (a1 + a2 + a3 + a4) / V (P) + V (F) + V (a1 + a2 + a3 + a4) + V (BM) * 100%, wobei V (P) = Volumen Pigmente, V (F) = Volumen Füllstoffe, V (BM) = Trockenfilmvolumina aller Bindemittel, V (a1 + a2 + a3 + a4) = Summe der Volumina der Festschmierstoffe a1) bis a4) ist, von 15 % bis 65 % beträgt.

17. Verwendung eines Gleitlacks nach einem oder mehreren der Ansprüche 1 bis 13, eines Pulverlacks nach Anspruch 14 und/oder einer Gleitlackschicht nach Anspruch 15 oder 16, insbesondere eines Gleitlacks nach einem oder mehreren der Ansprüche 1 bis 13, zur Schmierung eines tribologischen Systems, insbesondere eines tribologischen Systems im Automobilbereich.

18. Verwendung nach Anspruch 17, **dadurch gekennzeichnet, dass** der Gleitlack, der Pulverlack und/oder die Gleitlackschicht zur Schmierung eines Grundkörpers eines tribologischen Systems verwendet wird, wobei der Grundkörper ausgewählt ist aus Türdichtungen, bevorzugt Basisprofilen von Türdichtungen, insbesondere beflockten Basisprofilen von Türdichtungen, Klimakompressionskolben, Lagerschalen, Gleitlagerschalen, Dichtungsringen und/oder Profildichtungen.

19. Verwendung nach Anspruch 17 oder 18, **dadurch gekennzeichnet, dass** der Gleitlack, der Pulverlack und/oder die Gleitlackschicht zur Schmierung eines Grundkörpers eines tribologischen Systems verwendet wird, wobei der Grundkörper als Basismaterial Polymere enthält, die Flockfasern aufweisen.
